(19) Europäisches Patentamt
European Patent Office
Office européen des brevets

(11) **EP 4 044 073 A1**

(12) **EUROPEAN PATENT APPLICATION**

(43) Date of publication:
**17.08.2022   Bulletin 2022/33**

(21) Application number: **21157352.2**

(22) Date of filing: **16.02.2021**

(51) International Patent Classification (IPC):
**G06N 5/04** *(2006.01)*        **G06N 5/02** *(2006.01)*

(52) Cooperative Patent Classification (CPC):
**G06N 5/04; G06N 5/02**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **United Kingdom Atomic Energy
Authority
Oxford, Oxfordshire OX14 3DB (GB)**

(72) Inventors:
• **SKILTON, Robert**
  **Abingdon, Oxfordshire OX14 3DB (GB)**
• **GOODLIFFE, Matthew**
  **Abingdon, Oxfordshire OX14 3DB (GB)**
• **CALISKANELLI, Ipek**
  **Abingdon, Oxfordshire OX14 3DB (GB)**

(74) Representative: **Haseltine Lake Kempner LLP
Cheapside House
138 Cheapside
London EC2V 6BJ (GB)**

(54) **ROBOTIC SYSTEM MODELLING**

(57)    Modelling apparatus for modelling a robotic system, the modelling apparatus configured to: model the robotic system with a model, the model comprising instances of at least a subset of a set of defined types interconnected with links, each instance being a description of an element of the robotic system, the links between the instances representing relationships therebetween; and validate the model against validation rules by determining whether the model satisfies those rules, wherein the validation rules comprise: a definition of one or more directed acyclic graphs of the defined types interconnected with parent-child relationships, the defined types corresponding to nodes and the parent-child relationships corresponding to directional edges of the one or more directed acyclic graphs, each defined type defining type rules for that type which an instance of that type must satisfy in order to be valid, each parent-child relationship between a pair of the types defining those types as parent and child types relative to one another according to the corresponding edge direction, wherein each child type inherits the type rules of each of its parent types according to the parent-child relationships.

MODELLING APPARATUS                          100

MODELLER                          120

MODEL VALIDATOR                          140

VALIDATION RULES                          160

FIG. 2

EP 4 044 073 A1

**Description**

FIELD OF THE INVENTION

The present disclosure relates in general to robotic system modelling.

In particular, the present disclosure relates to modelling apparatus for modelling a robotic system, to a multi-apparatus modelling system comprising first and second such apparatuses, and to associated methods, computer programs and storage media. The modelling may comprise controlling the robotic system.

BACKGROUND OF THE INVENTION

A robot may be considered an autonomous or semi-autonomous machine, capable of carrying out a complex series of actions automatically. Robots can be guided by an external control device or by an embedded controller. One useful example is a robotic manipulator with a gripper attached thereto (together, a robotic arm).

Robotic systems (systems comprising one or more robots) are being used for an increasing number and range of tasks. This is particularly true in the worlds of nuclear energy, mining, petrochemical processing, and sub-sea operations, and is resulting in ever more complex robotics installations being deployed, maintained, and extended over long periods of time. Additionally, unstructured, experimental, or unknown operational conditions frequently result in new or changing system requirements, meaning extension and adaptation is necessary.

It is desirable to model robotic systems to describe or represent those robotic systems, for example to external systems, and/or to control those robotic systems.

Whilst existing modelling frameworks allow for robust integration of complex robotic systems, they are unfortunately not compatible with highly efficient maintenance and extension in the face of changing requirements and obsolescence issues, e.g. spanning decades-long periods.

SUMMARY OF THE INVENTION

It is desirable to provide improved robotic system modelling in the light of the above.

According to a first aspect of the present disclosure, there is provided modelling apparatus for modelling a robotic system, the modelling apparatus configured to: model the robotic system with a model, the model comprising instances of at least a subset of a set of defined types interconnected with links, each instance being a description of an element of the robotic system, the links between the instances representing relationships therebetween; and validate the model against validation rules by determining whether the model satisfies those rules, wherein the validation rules comprise: a definition of one or more directed acyclic graphs of the defined types interconnected with parent-child relationships, the defined types corresponding to nodes and the parent-child relationships corresponding to directional edges of the one or more directed acyclic graphs, each defined type defining type rules for that type which an instance of that type must satisfy in order to be valid, each parent-child relationship between a pair of the types defining those types as parent and child types relative to one another according to the corresponding edge direction, wherein each child type inherits the type rules of each of its parent types according to the parent-child relationships.

Such apparatus is advantageous in terms of maintainability, extensibility and interoperability. For example, with such a system of parent and child types where each child type inherits the type rules of each of its parent types, a rule change in a parent type efficiently affects its child types (and any grandchild types etc.). Further, a specific subset of a parent type (i.e. a particular child type) may be updated in terms of its rules without affecting the parent type or other child types of that parent type.

Where morphological rules are expressed in the validation rules, syntactic meaning and a binding structure represented in the ontology of types may be enforced to allow explicit assumptions to be made with regard to the structure of a given system, and facilitate interoperability.

According to a second aspect of the present disclosure, there is provided multi-apparatus modelling system comprising first and second modelling apparatuses configured to communicate with one another, each of the first and second modelling apparatuses being a modelling apparatus according to the aforementioned first aspect, wherein: the first modelling apparatus models a first robotic system with a first model of the first robotic system and the second modelling apparatus models a second robotic system with a second model of the second robotic system; and the multi-apparatus modelling system is configured to determine interoperability between the first model and the second model by: validating the first model against the validation rules of the second modelling apparatus; and/or validating the second model against the validation rules of the first modelling apparatus; and/or determining compatibility between at least a first-model-specific part of the one or more directed acyclic graphs of the first modelling apparatus and a second-model-specific part of the one or more directed acyclic graphs of the second modelling apparatus.

Such a multi-apparatus modelling system is advantageous particularly in terms of interoperability. Because the first and second modelling apparatuses each validate their models against their validation rules, interoperability between the first model and the second model can be determined by determining compatibility between at least the first-model-specific part of the one or more directed acyclic graphs of the first modelling apparatus and the second-model-specific part of the one or more directed acyclic graphs of the second modelling apparatus. Further, because of the way in which the types are defined by directed acyclic graphs with inheritance of rules, the compatibility can be determined in an efficient manner.

According to a third aspect of the present disclosure, there is provided a method of modelling a robotic system, the method comprising: modelling the robotic system with a model, the model comprising instances of at least a subset of a set of defined types interconnected with links, each instance being a description of an element of the robotic system, the links between the instances representing relationships therebetween; and validating the model against validation rules by determining whether the model satisfies those rules, wherein the validation rules comprise: a definition of one or more directed acyclic graphs of the defined types interconnected with parent-child relationships, the defined types corresponding to nodes and the parent-child relationships corresponding to directional edges of the one or more directed acyclic graphs, each defined type defining type rules for that type which an instance of that type must satisfy in order to be valid, each parent-child relationship between a pair of the types defining those types as parent and child types relative to one another according to the corresponding edge direction, wherein each child type inherits the type rules of each of its parent types according to the parent-child relationships.

According to a fourth aspect of the present disclosure, there is provided a computer program which, when executed on a computer, causes the computer to carry out the method of the aforementioned third aspect.

According to a fifth aspect of the present disclosure, there is provided a computer-readable medium having the computer program of the aforementioned fourth aspect stored thereon.

According to a sixth aspect of the present disclosure, there is provided a suite of methods comprising first and second methods, each of the first and second methods being a method according to the aforementioned third aspect, wherein: the first method models a first robotic system with a first model of the first robotic system and the second method models a second robotic system with a second model of the second robotic system; and the suite of methods further comprises determining interoperability between the first model and the second model by: validating the first model against the validation rules of the second method; and/or validating the second model against the validation rules of the first method; and/or determining compatibility between at least a first-model-specific part of the one or more directed acyclic graphs of the first method and a second-model-specific part of the one or more directed acyclic graphs of the second method.

According to a seventh aspect of the present disclosure, there is provided a suite of computer programs which, when executed on one or more computers, causes the one or more computers to carry out the suite of methods of the aforementioned sixth aspect.

According to an eighth aspect of the present disclosure, there is provided a computer-readable medium having the suite of computer programs of the aforementioned seventh aspect stored thereon.

According to a ninth aspect of the present disclosure, there is provided a robotic system comprising modelling apparatus according to the aforementioned first aspect, or the multi-apparatus modelling system according to the aforementioned second aspect. Also envisaged are corresponding method aspects, computer program aspects and storage medium aspects.

Features of one aspect may be applied to another and *vice versa.*

According to the aspects described above, the limitations of existing techniques are addressed. In particular, maintainability, extensibility and interoperability limitations in existing robotic system modelling techniques are addressed.

These and other aspects will be apparent from and elucidated with reference to the embodiment(s) described hereinafter.

BRIEF DESCRIPTION OF THE DRAWINGS

Exemplary embodiments will now be described, by way of example only, with reference to the following drawings, in which:

FIG. 1A is a schematic diagram of a robotic system embodying the present invention;
FIG. 1B is a schematic diagram of a robotic system embodying the present invention;
FIG. 2 is a schematic diagram of modelling apparatus embodying the present invention;
FIG. 3 is a schematic diagram of a model of a robotic system;
FIG. 4 is a simplified view of part of the model of FIG. 3, and is useful for understanding morphological rules;
FIG. 5 is a simplified view of part of the model of FIG. 3, and also is useful for understanding morphological rules;
FIG. 6 is schematic diagram of model portions, and also is useful for understanding morphological rules;
FIG. 7 presents a simplified directed acyclic graph of example defined types;

FIG. 8 presents a more extensive directed acyclic graph of defined types than that of FIG. 7;

FIG. 9 is a schematic diagram of an instance data unit, showing its structured format;

FIG. 10 is a schematic diagram of a type data unit, showing its structured format;

FIG. 11 is a schematic diagram of a multi-apparatus system comprising first and second modelling apparatuses;

FIG. 12 is a schematic diagram of a model-specific type graph;

FIG. 13 shows two type graphs which are compatible with one another;

FIG. 14 also shows two type graphs which are compatible with one another;

FIG. 15 shows two type graphs which are not compatible with one another;

FIG. 16 also shows two type graphs which are not compatible with one another;

FIG. 17 is a schematic diagram of a method useful for understanding that the modelling apparatus of FIG. 2 may operate in a series of loop cycles;

FIG. 18 is a schematic diagram of methods embodying the present invention; and

FIG. 19 is a block diagram of a computing device which may be used to implement any of the apparatuses or methods described herein.

## DETAILED DESCRIPTION OF EMBODIMENTS

The description below sets forth example embodiments according to this disclosure. Further example embodiments and implementations will be apparent to those having ordinary skill in the art. Further, those having ordinary skill in the art will recognize that various equivalent techniques may be applied in lieu of, or in conjunction with, the embodiments discussed below, and all such equivalents should be deemed as being encompassed by the present disclosure.

By way of introduction, the problems facing the development of control system software that is capable of supporting an application such as nuclear remote handling can be grouped into four main categories: interoperability, maintainability, extensibility and performance. Embodiments disclosed herein aim to solve long-term maintainability and extensibility issues through the use of standardised, self-describing data representations and associated communications protocols.

In order for a control system to support the various bespoke interfaces that are required when integrating hardware from a range of suppliers, while concurrently reducing integration efforts, a high level of interoperability is desirable. It will become apparent that the standard interface within the middleware offered by embodiments disclosed herein allows the various components of the system to be interoperable at the fundamental level, i.e. discovery and exploration of data and functionality within the system.

Further, a high level of modularity in the design and structure enforced by the framework architecture enables components of the system to be swapped out while minimising the impact on the rest of the system. This modularity further allows additional functionality to be added without altering existing components of the system. The ability to extend the capabilities of a system, while minimising the components affected is achieved with the highly cohesive, loosely coupled, high granularity architecture.

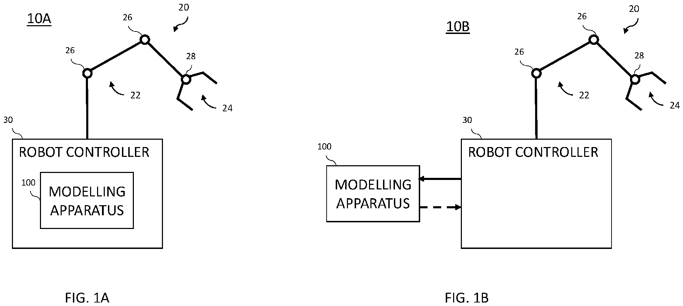

FIG. 1A is a schematic diagram of a robotic system 10A, which comprises a robot 20 and a robot controller 30.

In this example, the robot 20 is depicted as a robotic manipulator 22 with a gripper 24 attached thereto (together, a robotic arm). The arm comprises a plurality of joints 26 and the gripper similarly comprises a joint 28. Under control by the robot controller 30, in particular of the joints 26 and 28, motion of the robot 20 may be controlled. Of course, the robotic arm 22, 24 is a simple example of a robot and it will be appreciated that the techniques disclosed herein may be applied to any type of robot.

In some instances, the combination of the robot 20 and the robot controller 30 may be referred to itself as a robot. Further, although only a single robot 20 is shown in the robotic system 10A for simplicity, the robotic system 10A may comprise a plurality of robots, and those robots may be of different types from one another. Thus, a model of a robotic system as considered herein may in some instances correspond to a model of a robotic system comprising a plurality of robots, where those robots may be of different types from one another. Similarly, references to a robot herein may in some instances be taken as references to a plurality of robots, where those robots may be of different types from one another.

The robot controller 30 is shown as comprising a modelling apparatus 100, details of which will be explained later herein. As such, the robotic system 10A embodies the present invention. In some arrangements the modelling apparatus 100 may model the robotic system in the sense of representing or describing it. In some arrangements the modelling apparatus 100 may control the robotic system 10A, in particular the robot 20. The modelling apparatus 100 of course need not model itself, and as such the modelling apparatus may be considered separate from the robotic system 10A and part of a larger system which comprises the robotic system 10A.

FIG. 1B is a schematic diagram of a robotic system 10B, which is the same as the robotic system 10A except that the modelling apparatus 100 is provided separately from the robot 20 and robot controller 30, and connected for communication therewith. As before, and as indicated by the solid and dashed arrows, in some arrangements the modelling apparatus 100 may merely model the robotic system in the sense of representing or describing it whereas in some arrangements the modelling apparatus 100 may additionally control the robotic system, in particular the robot 20.

The modelling apparatus 100 of course need not model itself, and as such the modelling apparatus 100 may be considered separate from the robotic system 10A or 10B and part of a larger system which comprises the robotic system 10A or 10B. Put another way, the modelling apparatus 100 may be considered to model the robotic system 10A or 10B but not itself.

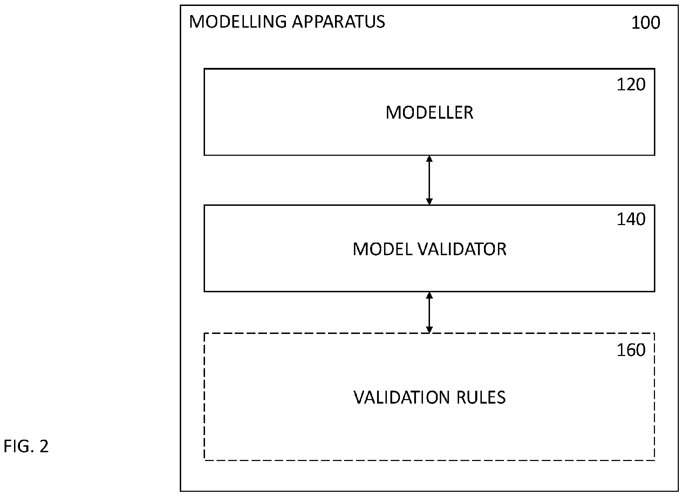

**FIG. 2** is a schematic diagram of the modelling apparatus 100. As a running example, the modelling apparatus 100 will be considered to be for modelling the robotic system 10A (as a representative one of the robotic systems 10A and 10B).

The modelling apparatus 100 comprises a modeller 120, a model validator 140, and validation rules 160 (although the rules may be stored externally from the modelling apparatus 100 and be accessible thereby). The modelling apparatus 100 may be considered computer-aided apparatus or may comprise computing apparatus, and for example may be implemented on a computer, in software, in hardware, or in a combination of software and hardware.

The modeller 120 is configured to model the robotic system 10A with a model. In this respect, the modeller 120 may be considered to control, run, or handle or maintain the model. The modeller 120 may be considered to execute, operate or implement the model. The model may be considered to simulate or emulate or represent or describe the robotic system 10A.

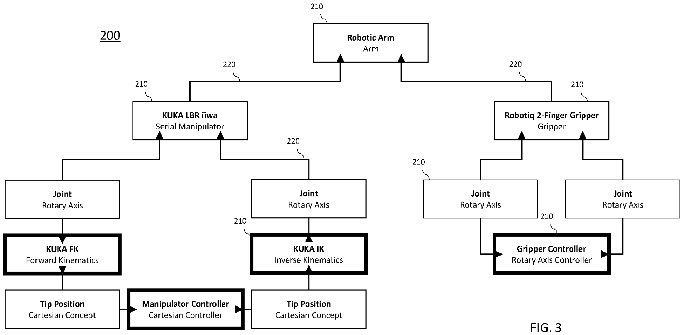

In this regard, reference is made to **FIG. 3,** which is a schematic diagram of a model 200 of the robotic system 10A, in particular of the robot 20 and/or the robot controller 30. Merely for simplicity, it is assumed that the robotic manipulator 22 has a single joint 26 (rather than two joints 26 as in FIG. 1A) and that the gripper 24 has a single joint 28.

The model 200 comprises instances 210 of defined types (represented by boxes) interconnected with links 220 (represented by arrows interconnecting the boxes), each instance being a description of an element of the robot 20 or robot controller 30 or simply of the robotic system 10A. The model 200 represents or describes a current state and/or a target state of the robotic system 10A. Merely to avoid overcrowding FIG. 3, not all of the instances 210 and not all of the links 220 have been labelled with reference signs, and similar considerations apply to other Figures.

The links 220 between the instances 210 represent relationships (including information flow) between the instances 210. Each of the instances is labelled with its name (in bold font) followed therebelow by the defined type (in non-bold font) of which it is an instance. In this context, an instance may be considered an example or occurrence of a data unit or item or block having the type concerned.

As depicted in FIG. 3, the model 200 defines a directed graph (or simply, a graph) of its instances 210, the links 220 being directional links, the instances 210 corresponding to nodes and the links 220 corresponding to edges of the directed graph.

It is also worth noting at this juncture that some of the instances 210 are represented with narrow-edged boxes whereas others are represented with wide-edged boxes. The instances 210 represented with narrow-edged boxes are instances 210 of descriptive types whereas the instances 210 represented with wide-edged boxes are instances of functional (or active) types.

The difference between descriptive types and functional types will be explored in more detail later, however for the present purposes each instance of a descriptive type describes a current state and/or a target state of its element the robotic system 10A, and each instance of a functional (or active) type describes how to manipulate data of an interconnected instance of a descriptive type to derive information which describes the robotic system and/or to model activity in the robotic system 10A.

Each link is "owned" by one of the instances 210 which it interconnects, the direction of the links 220 representing an "input relationship" or an "output relationship" between the interconnected instances 210 concerned, relative to the instance 210 owning the link 220 concerned, as will become apparent. Arrowheads in the boxes denote the ownership of the relationship, i.e. boxes that contain the arrowheads are the owners of the input or output relationship and are responsible for implementing any associated rules.

The direction of the links represents an input relationship between the interconnected instances concerned relative to the instance owning the link concerned when the direction points towards the instance owning the link concerned. The direction of the links represents an output relationship between the interconnected instances concerned relative to the instance owning the link concerned when the direction points away from the instance owning the link concerned.

For example, where the owner of a link is an instance of a functional type, that link may represent an "input relationship" or an "output relationship" between the interconnected instances 210 concerned. For example, for such a link whose direction points towards its owner instance, its other instance serves as (or is) an input for that owner instance. Similarly, for such a link whose direction points away from its owner instance, its other instance serves as an output for that owner instance.

Put another way, for at least one link whose direction points towards its functional owner instance, input information for that owner instance is represented in the other instance of that link or is read over that link from the other instance of that link. Similarly, for at least one link whose direction points away from its functional owner instance, output information of that owner instance is represented in the other instance of that link or is written over that link to the other instance of that link.

On the other hand, where the owner of a link is an instance of a descriptive type, that link may represent a "possessive relationship" or "structural relationship" between the interconnected instances 210 concerned. For example, the owner instance for such a link may be understood to "contain" or "have" the other instance of that link.

Taking a concrete example, returning to FIG. 3, the uppermost instance 210 is named "Robotic Manipulator" and is of type "Arm", and effectively represents the entire robot 20. This instance is then separately connected to an instance 210 named "KUKA LBR iiwa" of type "Serial Manipulator" and to an instance 210 named "Robotiq 2-Finger Gripper" of type "Gripper".

A KUKA LBR iiwa is a convenient example serial manipulator currently available from the company KUKA AG. LBR stands for "Leichtbauroboter" (German for lightweight robot), and iiwa for "intelligent industrial work assistant". A Robotiq 2-Finger Gripper is similarly a convenient example gripper currently available from the company Robotiq Inc..

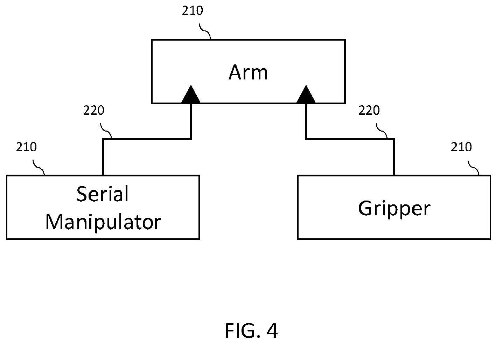

These instances 210 are instances of descriptive types and the links 220 interconnecting them are indicative of a "has a" or "contains a" relationship (i.e. a possessive or structural relationship) defined relative to the owner of those links. There is an input relationship defined in these links relative to the uppermost instance 210 named "Robotic Manipulator" and of type "Arm", expressing a possessive or structural relationship. Thus, the arm is understood to have or contain a serial manipulator and a gripper. The serial manipulator and gripper are effectively subcomponents of the arm, or the arm is effectively an assembly of (or comprises) the serial manipulator and gripper. This relationship is indicated more clearly in FIG. 4, which is a simplified view of part of the model 200 (with the names of the instances omitted).

Similarly, looking at FIG. 3, the serial manipulator and the gripper both "have" a rotary axis at their respective joints, and this is indicated by instances 210 named "Joint" and of type "Rotary Axis". Note here, however, that the instance 210 named "KUKA LBR iiwa" is linked to two instances 210 named "Joint", and that the same is true of the instance 210 named "Robotiq 2-Finger Gripper".

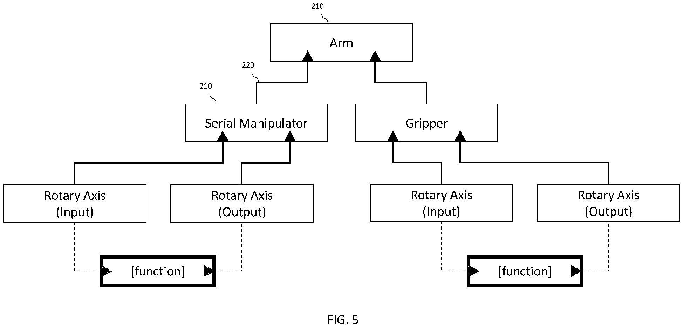

In each case, one of the rotary axis instances serves as an input instance, whose data relates to the current state of the robotic system 10A (specifically of the joint 26 or 28 concerned), and the other of those rotary axis instances serves as an output instance, whose data relates to a desired or demanded or target state of the robotic system 10A (specifically of the joint 26 or 28 concerned). This relationship is indicated in **FIG. 5,** which is a simplified view of part of the model 200 (with the names of the instances again omitted). Nevertheless, there is an input relationship (expressing a possessive or structural relationship) defined in these links between the rotary axis instances and the serial manipulator and gripper instances, relative to the serial manipulator and gripper instances.

Focussing on FIG. 5, the instances connected below the rotary axis instances in FIG. 3 are simplified as a single functional instance 210 of generic functional type "[function]" (for reasons that will become apparent later). Thus, for example, the rotary axis of the serial manipulator may have a current position represented by data of the "input" rotary axis instance 210, and may be assigned a target position represented by data of the "output" rotary axis instance 210. The single functional instance 210 of generic functional type "[function]" may then be configured to perform a process (simulating desired activity) on the current position of the rotary axis of the serial manipulator, as its input, to generate the target position of the rotary axis of the serial manipulator, as its output. The reasons for the dashed arrows in the links will be ignored here, but are commented on later.

It is worth noting here that the functional type "[function]" instances shown in FIG. 5 need not be present, and the same is true of the corresponding functional type instances in the model 200 of FIG. 3 (and the Cartesian Concept instances shown interconnecting some of those functional instances). For example, the model 200 may represent or describe the robotic system 10A without seeking to control it. For example, considering the "KUKA LBR iiwa" instance of type "Serial Manipulator" in FIG. 3, one of its rotary axis instances serves as an input instance whose data relates to the current state of the robotic system 10A, and the other of those rotary axis instances serves as an output instance whose data relates to a desired or demanded or target state of the robotic system 10A, as explained earlier. However, the data in those instances may be effectively "read" from the robotic system 10A so that the model describes the current state and the demanded or target state as provided by the robot controller 30 (but not the modelling apparatus 100) carrying out its own control.

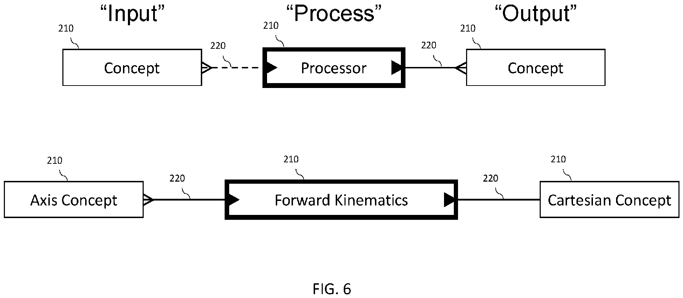

A model portion comprising "input", "output" and "process" instances is shown in the upper half of **FIG. 6,** indicating the input and output relationships between an instance of a functional type (performing the process) and input and output instances of descriptive types (describing a state of its element of the robotic system 10A). Here, the generic functional type "[function]" is replaced with a specific example of type "processor" (which implements a process), and the input and output instances of descriptive types are shown as instances of a high-level type "concept", in this case representing pure data describing an aspect of the robotic system (rather than e.g. representing a physical component). The reasons for the dashed and multi-tailed arrows in the links will again be ignored here, but are commented on later.

This model portion and the gripper section of the simplified model of FIG. 5 may be related back to the griper section of the model 200 of FIG. 3. In particular, the instance 210 named "Robotiq 2-Finger Gripper" is linked to two instances 210 named "Joint" and of type "Rotary Axis", which are linked to a functional instance named "Gripper Controller" of type "Rotary Axis Controller". The left-hand rotary axis instance serves as an input, and the right-hand rotary axis instance serves as an output, of the rotary axis controller instance. Thus, the rotary axis controller instance may use e.g. the current orientation of the rotary axis of the gripper (expressed by the left-hand rotary axis instance) as an input, and then output (based on some control input to be described later) a target orientation of the rotary axis of the gripper (then expressed by the right-hand rotary axis instance).

In the lower half of FIG. 6, a specific example of the model portion shown in its upper half is provided which relates more closely back to the serial manipulator section of the model 200 of FIG. 3. In this specific example, the input instance is an instance of an axis concept (representing e.g. the current orientation of an axis) and the output instance is an instance of a Cartesian concept (representing e.g. the current position of a tip of that axis). The functional instance in this example is an instance of a forward kinematics functional type, and effectively calculates the current position of the axis tip based on its orientation. As those familiar with control theory will be aware, the purpose of Forward Kinematics in this case is to derive the tip position of a manipulator using its joint/axis positions.

Returning now to the serial manipulator section of the model 200 of FIG. 3 itself, the instance 210 named "KUKA LBR iiwa" is linked to two instances 210 named "Joint" and of type "Rotary Axis". The left-hand rotary axis instance is linked via a forward kinematics instance named "KUKA FK" to a tip position instance named "Tip Position" (being an input instance - describing a current state). Similarly, the right-hand rotary axis instance is linked via an inverse kinematics instance named "KUKA IK" to another tip position instance named "Tip Position" (being an output instance - describing a target state).

The two tip position instances are linked to a functional instance named "Manipulator Controller" of type "Cartesian Controller". The left-hand tip position instance serves as an input, and the right-hand tip position instance serves as an output, of the Cartesian controller instance. Thus, the Cartesian controller instance may use the current tip position of the rotary axis of the manipulator (expressed by the left-hand tip position instance) as an input, and output (based on some control input to be described later) a target tip position of the rotary axis of the manipulator (then expressed by the right-hand tip position instance). The forward kinematics instance effectively calculates the current position of the axis tip based on its input current orientation, as above, and similarly the reverse kinematics instance effectively calculates the target orientation of the axis based on its input target axis tip position.

Returning to FIG. 2, the model validator 140 is configured to validate (check or assess the validity of) the model 200 against the validation rules 160 by determining whether the model 200 satisfies or meets or complies with (all of, or at least some of) those rules.

The validation rules 160 comprise a definition of one or more directed acyclic graphs (or simply graphs, or directed graphs, or acyclic graphs) of the defined types interconnected with parent-child relationships, where the defined types correspond to nodes and the parent-child relationships correspond to directional edges of the one or more directed acyclic graphs. Each defined type then defines type rules for that type which an instance of that type must satisfy in order to be valid. Further, each parent-child relationship between a pair of the types defines those types as parent and child types relative to one another according to the corresponding edge direction.

The effect of the parent-child relationships is that each child type inherits (or has, or includes or defines or absorbs or takes on) the rules of each of its parent types. That is, each child type is taken to have or include the rules of each of its parent types (by derivation or inheritance from, or reference to, its parent types) without needing to explicitly define (i.e. repeat) those rules itself.

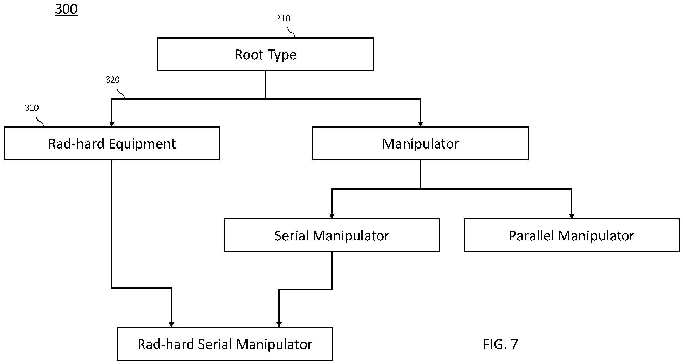

In this regard, reference is made to **FIG. 7,** which presents a simplified directed acyclic graph 300 of example defined types 310 (represented by boxes) interconnected with parent-child relationships 320 (represented by arrows interconnecting the boxes). The directed acyclic graph 300 may be considered simplified in that all of the defined types are descriptive types. For consistency with descriptive instances 210 shown earlier, the descriptive types are therefore represented with narrow-edged boxes.

The directed acyclic graph 300 is headed by a root type (or base type) in which rules common to all of the types are expressed. This root type is then shown to be a parent type in respect of two child types, namely a Rad-hard Equipment type (i.e. representing equipment which is resistant to damage or malfunction caused by high levels of radiation) and a Manipulator type. Effectively, these latter two types are different types or sub-sets of the root type. The Rad-hard Equipment type and Manipulator type thus both inherit (i.e. are considered to have amongst their own rules) the rules of their parent type, in this case the root type.

Similarly, the Manipulator type is shown to be a parent type in respect of two child types, namely a Serial Manipulator type and a Parallel Manipulator type. Effectively, these latter two types are different types or sub-sets of the Manipulator type. The Serial Manipulator type and Parallel Manipulator type thus both inherit (i.e. are considered to have amongst their own rules) the rules of their parent type, in this case the Manipulator type (and, by the inheritance higher up the graph, also the rules of the root type).

For completeness, the Rad-hard Equipment type and the Serial Manipulator type are both shown to be a parent type in respect of a child type, namely a Rad-hard Serial Manipulator type. Effectively, the Rad-hard Serial Manipulator type is a specific type or sub-set of both the Rad-hard Equipment type and the Serial Manipulator type. The Rad-hard Serial Manipulator type thus inherits (i.e. is considered to have amongst its own rules) the rules of each of its parent types, in this case those of the Rad-hard Equipment type and the Serial Manipulator type (and, by the inheritance higher up the graph, also the rules of the Rad-hard Equipment type, the Manipulator type, and the root type).

Thus, the validation rules 160 allow for multiple inheritance of rules by types, as defined by the directed acyclic graph concerned. Each child type defines the type rules which that child type inherits from each of its parent types by reference to each of its parent types, rather than by *verbatim* repeating those rules within itself. This for example allows a rule change in a parent type efficiently to affect all of its child types (and any grandchild types etc.). Each child type defines within itself each type rule for that child type beyond the type rules which that child type inherits from each of its parent types. This then allows for a specific subset of a parent type (i.e. a particular child type) to be updated in terms of its rules without affecting the parent type or other child types of that parent type. Where multiple inheritance is implemented, at least one child type has at least two parent types. Multiple generations may be represented in the hierarchy (as in FIG. 7, e.g. grandparent - parent - child).

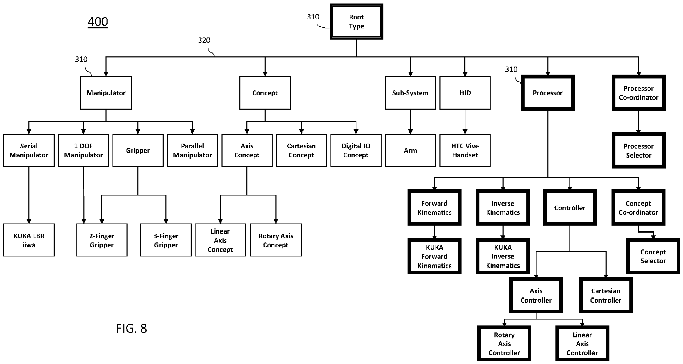

Reference is now made to **FIG. 8,** which presents a fuller (or larger or more extensive) directed acyclic graph 400 of the defined types 310 (represented by boxes) interconnected with parent-child relationships 320 (represented by arrows interconnecting the boxes). The directed acyclic graph 400 may be considered fuller as compared to the directed acyclic graph 300 in that it comprises both functional and descriptive types, and in that it comprises sufficient defined types (e.g. a set of defined types) to support validation of the model 200 of FIG. 3 (which, in this example, comprises instances of a subset of the set of defined types). For consistency with instances 210 shown earlier, the descriptive types are represented with narrow-edged boxes and the functional (or active) types are represented with wide-edged boxes.

As with the directed acyclic graph 300, the directed acyclic graph 400 is headed by a root type (or base type) in which rules common to all of the types may be expressed. Given that both functional and descriptive types are present, this root type is represented with both a wide-edged and narrow-edged box. This root type is shown to be a parent type in respect of four descriptive child types, namely Manipulator, Concept, Sub-System and HID (Human-Interface Device) types, and two functional types, namely Processor and Processor Co-ordinator types.

The Manipulator type is a parent type in respect of four child types, namely Serial Manipulator, 1 DOF (Degree of Freedom) Manipulator, Gripper and Parallel Manipulator types.

The Serial Manipulator type is a parent type of the specific type of serial manipulator known as a KUKA LBR iiwa, as mentioned earlier. Thus, a KUKA LBR iiwa type is understood to be a sub-set (or sub-type) of the Serial Manipulator type. Of course, the KUKA LBR iiwa is just one example type of serial manipulator.

The 1 DOF Manipulator and Gripper types are both shown to be a parent type in respect of a 2-Finger Gripper type, implementing multiple inheritance as mentioned earlier. The Gripper type is also a parent type in respect of a 3-Finger Gripper type. Thus, a 2-Finger Gripper type is understood to be a sub-set (or sub-type) of both the 1 DOF Manipulator and Gripper types, whereas the 3-Finger Gripper type is a subset of only the Gripper type.

The Concept type, representing pure data describing an aspect of a robotic system, is a parent type in respect of three child types, namely Axis Concept, Cartesian Concept and Digital IO Concept types. The Axis Concept type is a parent type in respect of two child types, namely Linear Axis Concept and Rotary Axis Concept types. The Sub-System and HID types are parent types to Arm and HTC Vive Handset types, respectively. The HTC Vive Handset type is thus a specific type of HID, corresponding to a HTC Vive Handset as currently available from the company HTC Corporation. Of course, the HTC Vive Handset is just one example type of HID.

The Processor type is a parent type in respect of four child types, namely Forward Kinematics, Inverse Kinematics, Controller and Concept Co-ordinator types. The Forward Kinematics and Inverse Kinematics types are parent types to KUKA Forward Kinematics and KUKA Inverse Kinematics types, respectively, these representing functionality specific to products of the company KUKA AG, and are thus provided as convenient examples. The Controller type is a parent type in respect of two child types, namely Axis Controller and Cartesian Controller types. The Axis Controller type in turn is a parent type in respect of two child types, namely Rotary Axis Controller and Linear Axis Controller types.

Finally, the Processor Co-ordinator, Concept Co-ordinator and Controller types are parent types to Processor Selector, Concept Selector, and Cartesian Controller types, respectively.

Incidentally, the Inverse and Forward Kinematics types, different types of Controllers and Concept (data) Co-ordinators are all categorised under the Processor type, whereas the Processor Co-ordinator type has been associated only with the Processor Selector type in the provided hierarchy, as an example. Fundamentally, Kinematics modules are responsible for the motion of objects and the forces required to provide the motion.

Of course, although the directed acyclic graph 400 may be considered fuller (or larger or more extensive) as compared to the directed acyclic graph 300, it will be appreciated that any number of defined types may be represented in another, optionally fuller still (or larger or more extensive), directed acyclic graph. Also, although the directed acyclic graph 400 is shown as a single directed acyclic graph comprising the relevant defined types (including descriptive and functional types), it would be possible to represent the defined types in more than one directed acyclic graph, such as one for descriptive types (akin to directed acyclic graph 300, for example) and one for functional types. Therefore, it will be understood that the validation rules comprise a definition of one or more directed acyclic graphs of the defined types, and the present disclosure will be interpreted accordingly. In the case of the defined types being defined by a combination of more than one directed acyclic graph, it those graphs may have their own separate root types, or may have a common, shared, root type.

In the present arrangement, the validation rules 160 also comprise morphological rules which define, for at least one particular defined type, interconnections which an instance of that particular defined type must have with other instances of at least a subset of a set of defined types in a model (such as model 200) in order for the model to be valid. Such morphological rules may not be provided in some arrangements.

Morphology is of course the study of form and structure. Within the present framework or arrangement, an ontology (the defined types and instances thereof) is used to build a common structure of the domain-specific information, to distribute and reuse to make explicit assumptions. Therefore, a robotics and control system ontology is used to provide semantic meaning to components of robotic and control system elements, represented by the instances of types and the types themselves (including their hierarchy). On the other hand, morphology is used to provide a set of rules to enforce the syntactic meaning and a binding structure to the component types represented in the ontology to achieve operational success among the distributed components, and allow explicit assumptions to be made with regard to the structure of a given system, to facilitate interoperability.

The defined types that are provided in the ontology, not only define functionality and structure, but also data represented, and external interfaces. Relationships in the context of components presented in the ontology define connections to other components (elements). Types can define not only the relationships a component must have (to be considered of that particular type), but also how many (minimum, maximum, or absolute) components must be related to it, and define a particular type that the related components must be. The result of these relationship rules is that a system develops a particular morphology, which is consistent between all systems using common types. These morphologies tend to fall into one of two distinct groups: structural as shown in FIG. 4 and behavioural as shown in FIG. 6.

Structural morphologies are either used to describe how the physical counterparts of descriptive instances are connected in reality, or to compose several granular descriptive instances under one another (e.g. to represent a nested relationship).

For example, looking at FIG. 4, the Arm is an example of how relationships can be used to describe physical assemblies. In this example, an Arm physically comprises a Serial Manipulator and a Gripper. This translates as a robotic component is considered as a robotic Arm (see e.g. the model 200 of FIG. 3) if it consists of a Serial Manipulator (e.g. KUKA LBR iiwa) and a Gripper (e.g. Robotiq 2-Finger Gripper). This is achieved using two example relationship rules: the first is that an Arm must have an input relationship of type Serial Manipulator, the second is that an Arm must have an input relationship of type Gripper. This means that an instance of type Arm cannot be added to a model such as model 200 without an instance of type Serial Manipulator and an instance of type Gripper and the relationships (links) configured to connect them. This makes models in accordance with the present framework and their component structure highly discoverable and navigable, as these structures can be recognised and explored.

Similarly, an HTC Vive Handset might be described by combining (via relationships) a single Cartesian Concept and one or more (signified by a many-to-one symbol) Digital IO Concepts. These components may then be used to describe an HTC Vive Handset's position in 3D space (which is provided by a tracking system) and the state of its buttons. These relationships would then both be inputs of an instance of type HTC Vive Handset as the state of the individual components must be evaluated first, before complete knowledge of the state of the HTC Vive Handset which is being modelled can be known. Similar to the Arm example of FIG. 4, these relationship rules allow the creation of recognisable and expected structures within a model such as model 200, which can be used to contextualise groups and derive semantic meaning.

In FIG. 4, the Arm structural morphological rules may be considered to be illustrated visually. Arrowheads in the boxes denote the ownership of the rule as earlier; boxes that contain the arrowheads are the owners of the morphological rules and are responsible for implementing the associated rule.

Behavioural morphologies are created when combining descriptive and functional (active) instances, and are therefore helpful when considering controlling a robotic system such as robotic system 10A, rather than simply representing it (recall the solid and dashed arrows in FIG. 1B).

A Processor example is shown in the upper half of FIG. 6, as a simple example of how descriptive and functional instances can be used together. This example uses the basic types of Concept and Processor and has no particular functional purpose, but is used to establish a template that instances of specific types can follow. The Processor type is shown as defining the first and third of the following three relationship or morphological rules: 1) an instance of the type Processor may have one or more (signified by the dotted line and one-to-many symbol) input relationships of type Concept; 2) a processor may have one or more input relationships of type Processor; and 3) an instance of the type Processor must have at least one (signified by a solid line and one-to-many symbol) output relationship of type Concept. These three relationship rules exist for behavioural reasons, and exist to ensure the instance of type Processor is able to function. The first rule is to provide input to the processor. This may not be required if the processor is "open loop" and is therefore optional. The second rule is designed to allow for sub-processes that may need to be completed first for the processor to function. This may also not be required and is therefore also optional (and is not shown in FIG. 6). The final rule is to provide an output for the processor. This is essential, as without an output, the processor is not making a contribution to the state of the system, and is therefore redundant.

It will be appreciated thus that such morphological rules define interconnections which an instance of a particular defined type must have with other instances of defined types in a model in order for the model to be valid. Such morphological rules may be defined in the type rules of the respective types, or separately, and may not be provided in some arrangements. Example such rules have been given above, but of course many other interconnected groups of instances of types may be defined in the rules. FIG. 5 shows once such example, where a robotic component is considered as a robotic Arm if it consists of a Serial Manipulator and a Gripper (as before), each having a rotary axis, and where each rotary axis has input and output instances which may (signified by the dashed arrow) be connected by a functional instance.

It is notable that function can be evident and implied in the morphologies defined by the morphological rules. For example, the Forward Kinematics example in the lower part of FIG. 6 is a less abstract example of the Processor morphology shown in the upper part. In this case, the generic Concept types have been inherited by more concrete Axis Concept and Cartesian Concept types, but this change still satisfies the morphological rules established by the base Processor type, as both Axis Concept and Cartesian Concept inherit from the Concept type (see FIG. 8). Thus, morphological rules may be inherited by child types from their parent types. The purpose of forward kinematics to derive the tip position of a manipulator using its joint positions is then evident in the morphology, as the Forward Kinematics instance takes one-or-many Axis Concept instances as its input (in this case the joint positions) and produces an output of a single Cartesian Concept instance (in this case representing the tip position). Similarly to the structural morphologies described earlier, these behavioural morphologies help create consistent, discoverable, and navigable structures within the overall framework.

Returning to FIG. 3, it is recalled that each node represents an instance 210 of a defined type 310. In the present arrangement, each instance is implemented as an instance data unit which optionally defines its links to another instance of the model 200.

In overview, each instance data unit (which may be referred to as a Simplex) comprises an indication of the defined type of which it is an instance, and typed data. Each instance data unit may further comprise a definition of the status of one or more supported commands. Advantageously, the instance data units may have the same structured format as one another.

Taking active control into account, which is optional, an instance data unit 500 may be associated with an extension data unit (not shown) defining a task to be executed to manipulate data of the instance concerned or of an interconnected instance. The combination of an instance data unit 500 and an extension data unit may be considered as an extension or extended data unit in itself (extended relative to an instance data unit 500), however it may be advantageous for the instance data units 500 nevertheless to have the same structured format as one another irrespective of whether active control is implemented.

In more detail, in the present arrangement the instance data units use the same format for internal data representation and have the same external interface as one another. This data representation can be used as part of a communications protocol to allow distributed components of a single control system to exchange data without prior knowledge of each other. This means, for example, a model such as model 200 (e.g. acting as a control system) can grow to incorporate new hardware and control features without modifying other distributed components.

The instance data units 500 facilitate functionality within the control system, including: defining data, describing input and output relationships, calling functionality, representing (a part of) a system, controlling an active element (i.e. controller), or communicating with other instance data units within the system.

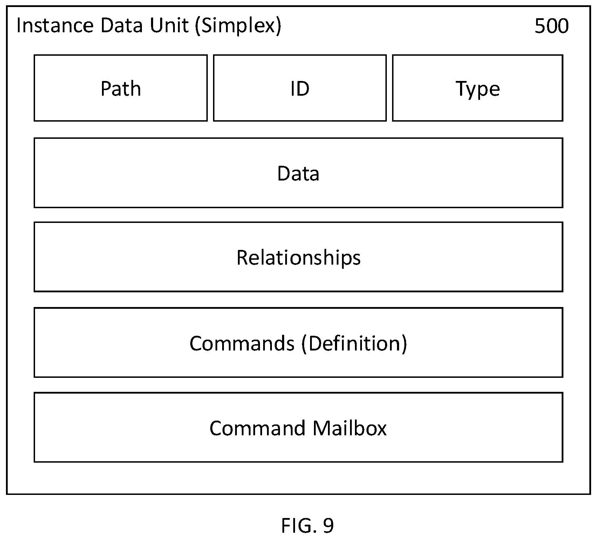

**FIG. 9** is a schematic diagram of an instance data unit 500, showing its structured format. A typical instance data unit 500, $S_m \in S$, is a self-contained unit of information, and is the tuple (or ordered, defined, list):

$$s_m = \ <type_m,\ id_m,\ data_m,\ rlsp_m,\ cmd_m,\ cmdbox_m>$$

where

- $type_m$ corresponds to Type in FIG. 9, and is a unique identifier which references a type from the type graph concerned (e.g. directed acyclic graph 400). The instance data unit 500 must satisfy all validation rules expressed in or for the referenced type (and its ancestors, by inheritance, as described earlier).

- $id_m$ correspond to Path and ID in FIG. 9, and is a unique identifier which identifies the instance data unit 500 concerned. The Path may enable grouping/organisation of instance data units 500.

- $data_m$ corresponds to Data in FIG. 9, and comprises identifier/value pairs of data items of prescribed data types, defined by the validation rules expressed in or for the referenced type. The values may be *int, float, bool* or *string* values, for example, and may comprise arrays.

- $rlsp_m$ corresponds to Relationships in FIG. 9, and defines one or more links 210 to other instance data units 500 as identifier/path pairs (thereby defining the overall model, such as model 200), e.g. in order to obtain information or call a command.. The links can be defined in an array and have a direction as mentioned earlier (e.g. expressing input/output relationships). The links also have a related type, expressing the morphological relationships (and implementing the morphological rules) mentioned earlier.

- $cmd_m$ corresponds to Commands in FIG. 9, and defines one or more commands and their availability to be called as identifier/availability pairs. A command may be considered a function which can be called in order to perform a task or change. Commands can be declared with a list of request parameters, which are sent with the call, and can return response parameters upon completion, and the parameters can have data types and can be arrays.

- $cmdbox_m$ corresponds to Command Mailbox in FIG. 9, and is a standardised interface to exchange commands. The Command Mailbox may contain a queue of commands sent to the instance data unit 500 (by other instance data units). Each command may have a unique number or identifier, request parameter values, response parameter values, and a state (e.g. pending, sent, received, success, failure, etc.).

As mentioned earlier, taking active control into account, an instance data unit 500 may be associated with an extension data unit (not shown) defining a task to be executed to manipulate data of the instance concerned or of an interconnected instance.

In such a case, the tuple may be thought of as being extended to also define (separately from the instance data unit 500):

- $task_m$, defining a function to be executed in each loop cycle of the overall system (as commented on in more detail later).

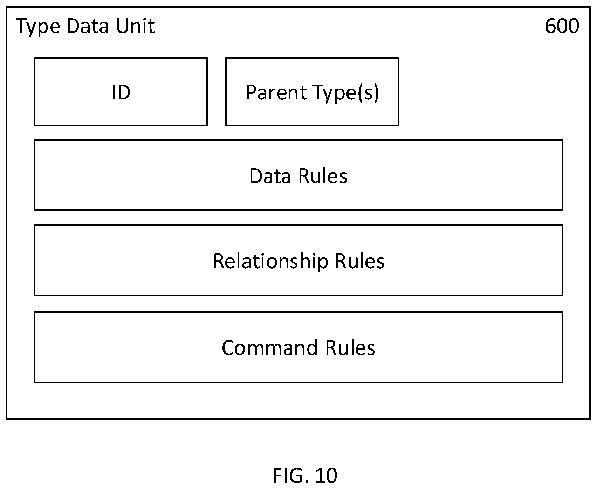

Alongside the instance data units 500 are type data units 600 (which may also be referred to as Simplexes). **FIG. 10** is a schematic diagram of a type data unit 600, showing its structured format.

The one or more directed acyclic graphs of the defined types (see e.g. the directed acyclic graph 400) comprise a type data unit 600 per defined type 310, each said type data unit defining the defined type concerned and optionally, for each defined type other than a root defined type corresponding to a root node of the one or more directed acyclic graphs, the parent-child relationship to each of its parent types.

In overview, each type data unit 600 comprises an indication its defined type 310, and a definition of at least one data type of which data type data of an instance of the defined type must be. Each type data unit 600 may further comprise a definition of how the status of one or more supported commands must be expressed in an instance 210 of the defined type 310. Advantageously, the type data units 600 may have the same structured format as one another.

Further, the structured format of the instance data units 500 may correspond to the structured format of the type data units 600, and this can be seen by comparing FIGS. 9 and 10. This leads to standardised (but extensible) data units or blocks and assures standardised data exchange between blocks. The standardised information exchange is guaranteed or enabled by the standardised interface. The ability to use a data unit of a given structure at various levels of its inheritance hierarchy allows for standardisation but also extension, in the form of polymorphism. This is one of the advantages of using an ontological type system.

Looking at FIG. 10, the ID section is a unique identifier which identifies the type 310 concerned. The Data Rules section comprises identifier/definition pairs, with each definition being a rule which enforces that an instance data unit 500 (of that type) must contain a data item with a specified data type, and optionally with a minimum and/or maximum array size. The Relationship Rules section similarly comprises identifier/definition pairs, with each definition being a rule which enforces that an instance data unit 500 (of that type) must define one or more links (with a specific data type), optionally in an array of a minimum and/or maximum array size - corresponding to morphological rules. The Commands Rules section comprises identifier/definition pairs, with each definition being a rule which contains a list of request and/or response parameter definitions. Each parameter definition then enforces that an instance data unit 500 (of that type 310) must define a command with a parameter of a specific data type, and optionally in an array of a minimum and/or maximum array size.

The Parent Type(s) section allows the types 310 to be linked together in a directed acyclic graph as in the directed acyclic graph 400. As before, the child types inherit the rules of their parent types, and more than one parent type is allowed per child type, implementing multiple inheritance. All rules, including those inherited from ancestor types must be satisfied by an instance data unit 500 (i.e. an instance 210) of that type 310.

As mentioned earlier, the modelling apparatus 100 may be employed to represent the robot concerned but not control it. However, the modelling apparatus 100 may also be employed to actively control the robot 20 (or robotic system 10A) concerned. For example, such active control may be applied in the active functionality of a "[function]" instance in FIG. 5 (which may represent a combination of plural instances), whose output becomes demand or target data of the "output" rotary axis instance concerned and is then applied to the robot 20 (or robotic system 10A) to control it. Of course, any complexity of active functionality may be implemented in a particular application.

In this regard, the modelling apparatus 100 may comprise an interface for connection between the modelling apparatus 100 and the robotic system 10A, wherein the modelling apparatus 100 is configured, following validation of the model 200, to: receive data (e.g. signals or data signals, which may be referred to as control signals) from the robot 20 via the interface and to update the model based on the received data; and/or output data via the interface to the robot 20 (or robotic system 10A) to control the robot 20 (or robotic system 10A) based on the model 200. As an example, where the modelling apparatus 100 is employed to represent or describe the robot 20 (or robotic system 10A) concerned but not control it, the model 200 may comprise only instances of descriptive types, or only instances of descriptive types and instances of a subset of the available functional types (e.g. including the Forward Kinematics type to discover information about - i.e. describe - a tip position without controlling it).

Looking back in particular at FIGS. 3, 8, 9 and 10, it will be appreciated that the use of standardised instance data units 500 (FIG. 9) and type data units 600 (FIG. 10), with an ontology of defined types (see FIG. 8), allows common building blocks to be employed in a model (see FIG. 3) at a level of granularity associated with minimal reusable units.

The concept behind the self-describing, distributed data model is built upon instances 210 with defined types 310 that are associated with a software ontology and morphology techniques. The ontology provides semantic meaning to robotic and control systems components, and the morphological rules associate syntax with the components represented in the system.

The ontology (expressed in the defined types and associated type rules) ensures common and consistent use of domain knowledge and allows domain assumptions to be explicit. Where, for example, there is a multi-apparatus system of modelling apparatuses 100 (which, in this context, may be referred to as agents), if the validation rules (type rules and optionally morphological rules) are shared before execution, then models (such as model 200) can be validated in a way that ensures interoperability between those models across the modelling apparatuses 100. At runtime, the modelling apparatuses 100 can then make explicit assumptions using the knowledge represented in the shared ontology (and shared models), thus ensuring the consistent reuse of distributed domain knowledge among the modelling apparatuses 100.

By distributing the validation rules (type model or rules, and optionally morphological rules) e.g. at runtime, prior knowledge is not required. The validation rules can also be completely customised for a particular application, rather than using predetermined types. If two modelling apparatuses 100 (agents) are required to interoperate then the types within their type models must not contradict each other, but the overall models do not need to be identical.

Consider the following example: Agent A declares an Axis type, and it contains position, velocity, and acceleration data. Agent B declares an Axis type but states that it contains position, velocity, and torque data. These two agents are not interoperable as they do not agree on the definition of the Axis type.

However, now consider this example: Agent A declares the Axis type as before. Agent B declares an Axis type with a definition that matches Agent A, but also declares another type that inherits from Axis, states it contains torque data, and calls it AxisWithTorque. These two agents are now interoperable as they do not conflict in their definitions of any types, but Agent B can extend the Axis type to include the required data. Not only does this mean that Agent B can add its data to the system, but Agent A can also use an instance of type AxisWithTorque with any interface designed for an instance of type Axis as one inherits from the other, and therefore must contain all the required information from the Axis type.

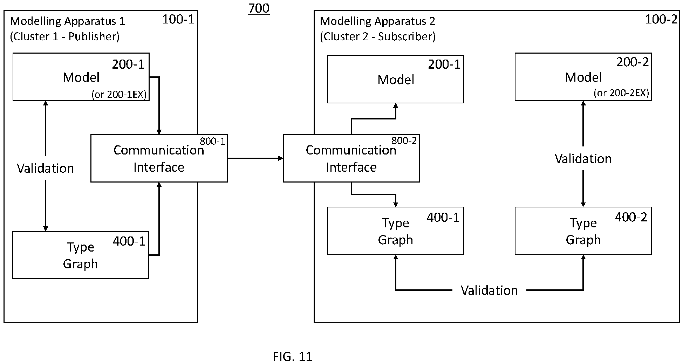

**FIG. 11** is a schematic diagram of a multi-apparatus system 700 comprising first and second modelling apparatuses 100-1 and 100-2 configured to communicate with one another. Each of the first and second modelling apparatuses 100-1 and 100-2 may be considered a modelling apparatus 100 as in FIG. 2. Of course, the multi-apparatus system 700 may comprise two or more than two modelling apparatuses 100 configured to communicate with one another.

For ease of explanation, the modeller 120, model validator 140 and validation rules 160 of FIG. 2 are not shown explicitly in the modelling apparatuses 100-1 and 100-2. Instead, focus is placed on the model 200 of FIG.3 and the type graph of 400 FIG. 8.

Thus, the first modelling apparatus 100-1 is shown to comprise a first model 200-1, corresponding to model 200, and a first type graph 400-1, corresponding to type graph 400. Similarly, the second modelling apparatus 100-2 is shown to comprise a second model 200-2, corresponding to model 200, and a second type graph 400-2, corresponding to type graph 400.

The first modelling apparatus 100-1 may be considered here as a first Agent or first Cluster, and similarly the second modelling apparatus 100-2 may be considered here as a second Agent or second Cluster. Thus, for example, the first modelling apparatus 100-1 controls the first model 200-1 taken to be of a first robotic system 10A-1 (not shown) and the second modelling apparatus 100-2 controls the second model 200-2 taken to be of a second robotic system 10A-2 (also not shown).

As indicated in FIG. 11, the first and second modelling apparatuses 100-1 and 100-2 comprise first and second communication interfaces 800-1 and 800-2, respectively, and are thus configured to communicate with one another. It is assumed for the present example that first and second modelling apparatuses 100-1 and 100-2 have a publisher-subscriber relationship, with the first modelling apparatus 100-1 serving as a publisher and the second modelling apparatus 100-2 serving as a subscriber. In this sense, the first modelling apparatus 100-1 could be considered a 'local' apparatus and the second modelling apparatus 100-2 could be considered a "remote" apparatus.

In its role as subscriber, the second modelling apparatus 100-2 is configured to determine interoperability between the first model 200-1 of the first robotic system 10A-1 and the second model 200-2 of the second robotic system 10A-2. To this end, the first and second modelling apparatuses 100-1 and 100-2 communicate over the first and second communication interfaces 800-1 and 800-2 such that - as shown in FIG. 11 - the second modelling apparatus 100-2 (acting as subscriber) obtains the first model 200-1 (describing the first robotic system 10A-1) and the first type graph 400-1 from the first modelling apparatus 100-1 (acting as publisher, and making the first model 200-1 and the first type graph 400-1 available).

Incidentally, as mentioned earlier, it is possible that the first model 200-1 may be "extended" in some arrangements to enable active control of the first robotic system 10A-1. However, as explained in connection with FIG. 9, such active control need not be (and, in some arrangements, advantageously is not) expressed in the instance data units 500. In such a case, the first model 200-1 may be considered an extended model 200-1EX (indicated in brackets in FIG. 11, as being optional) but the non-extended first model 200-1 (not the extended model 200-1EX) may be what is communicated to the second modelling apparatus 100-2 so as to simply describe the first robotic system 10A-1 to the second modelling apparatus 100-2. With the non-extended models being the communicated models, in line with the instance data units 500, the advantages of standardised data units and interfaces are enjoyed in terms of ready interoperability across multi-apparatus systems (i.e. without one modelling apparatus needing to concern itself with active control performed by another modelling apparatus).

Of course, similarly, the second model 200-1 may be an extended model 200-2EX in some arrangements.

As explained earlier, each of the first and second modelling apparatuses 100-1 and 100-2 is configured to validate its model against its validation rules by determining whether its model satisfies those rules, and this is indicated in FIG. 11. Specifically, the first modelling apparatus 100-1 is configured to validate the first model 200-1 (or 200-1EX) against the first type graph 400-1 (representative of the validation rules of that apparatus), and the second modelling apparatus 100-2 is configured to validate the second model 200-2 (or 200-2EX) against the second type graph 400-2 (representative of the validation rules of that apparatus). In this way, the first and second modelling apparatuses 100-1 and 100-2 may operate independently of one another in accordance with the teaching above.

However, additionally, the multi-apparatus modelling system 700 is configured to determine interoperability between the first model 200-1 and the second model 200-2 by: validating the first model 200-1 against the validation rules of the second modelling apparatus 100-2; and/or validating the second model 200-2 against the validation rules of the first modelling apparatus 100-1; and/or determining compatibility between at least a first-model-specific part of the one or more directed acyclic graphs 400-1 of the first modelling apparatus 100-1 and a second-model-specific part of the one or more directed acyclic graphs 400-2 of the second modelling apparatus 100-2.

In the example of FIG. 11, the second modelling apparatus 100-2 is configured to determine the interoperability by determining compatibility between the first type graph 400-1 and the second type graph 400-2, as indicated.

The first and second type graphs 400-1 and 400-2 could be taken to be the full "apparatus-level" type graphs of their respective modelling apparatuses, akin to the type graph 400 of FIG. 8. Indeed, this would be a way to determine "full" interoperability between the two modelling apparatuses (and thus their models). However, a more efficient way to determine interoperability may be to do this to the extent necessary to operate the first and second models 200-1 and 200-2 (and "deem" or assume other rules - i.e. which are not impacted and thus do not need to be tested or checked against - to have been satisfied or met).

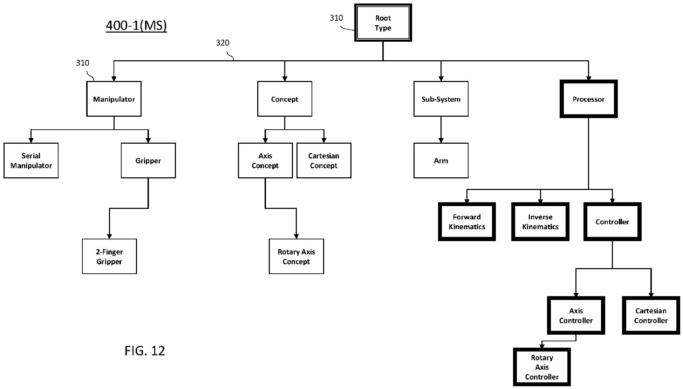

To this end, the first type graph 400-1 may be considered a first-model-specific part of the one or more directed acyclic graphs of the first modelling apparatus 100-1, and be a part of the one or more directed acyclic graphs of the first modelling apparatus 100-1 which comprises each root defined type corresponding to each root node, all of the defined types having instances in the first model 200-1 and each other defined type connected therebetween via the parent-child relationships. **FIG. 12** is a schematic diagram of such a model-specific first type graph 400-1(MS), and it can be seen that it does not include all of the types of the type graph 400 of FIG. 8 (and may thus be considered not to express all of the rules of the type graph 400 of FIG. 8). For example, the type graph 400 of FIG. 8 may be considered to define a set of defined types (and their associated rules) and the type graph 400-1(MS) of FIG. 12 may be considered to define a subset of the set of defined types (and their associated rules). That set may itself be a subset of a larger set of defined types in some arrangements. The first modelling apparatus 100-1 may be configured to generate the first-model-specific part of the one or more directed acyclic graphs of the first modelling apparatus 100-1.

It will be appreciated that the second type graph 400-2 may similarly be considered a second-model-specific part 400-2(MS) of the one or more directed acyclic graphs of the second modelling apparatus 100-2, and be a part of the one or more directed acyclic graphs of the second modelling apparatus 100-2 which comprises each root defined type corresponding to each root node, all of the defined types having instances in the second model 200-2 and each other defined type connected therebetween via the parent-child relationships. The second modelling apparatus 100-2 as such may be configured to generate the second-model-specific part of the one or more directed acyclic graphs of the second modelling apparatus 100-2.

It is worth noting that the structured format of the instance data units 500 and type data units 600 may be the same or substantially the same between the first and second modelling apparatuses 100-1 and 100-2. This leads to standardised (but extensible) data units or blocks across the multi-apparatus system 700 and assures standardised data exchange between blocks and also between the first and second modelling apparatuses 100-1 and 100-2.

The multi-apparatus modelling system 700 is configured to determine that at least the first-model-specific part of the one or more directed acyclic graphs of the first modelling apparatus 100-1 and at least the second-model-specific part of the one or more directed acyclic graphs of the second modelling apparatus 100-2 are compatible if those defined types which are in both of those parts are substantially identical or define at least the same type rules as one another, or if those parts do not define conflicting rules or a conflicting hierarchy of defined types.

In principle, either the first modelling apparatus 100-1 or the second modelling apparatus 100-2 could determine compatibility between the first-model-specific part of the one or more directed acyclic graphs of the first modelling apparatus 100-1 and the second-model-specific part of the one or more directed acyclic graphs of the second modelling apparatus 100-2. However, in the case of FIG. 11, the second modelling apparatus 100-2 (acting as subscriber) determines compatibility between the first and second type graphs 400-1 and 400-2 (being apparatus-level or model-specific graphs).

Incidentally, taking e.g. the first modelling apparatus 100-1 alone, that apparatus could validate its model 200-2 against its validation rules by determining whether its model satisfies those rules, using a sub-set of its validation rules equivalent to the model-specific graph 400-1(MS) of FIG. 12, rather than against all of the validation rules equivalent to the apparatus-level graph 400 of FIG. 8. That is, other rules - i.e. which are not impacted and thus do not need to be tested or checked against - may be assumed or deemed to have been satisfied or met.

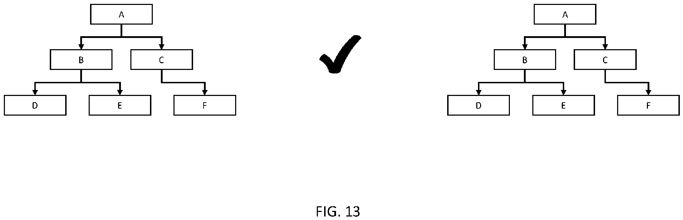

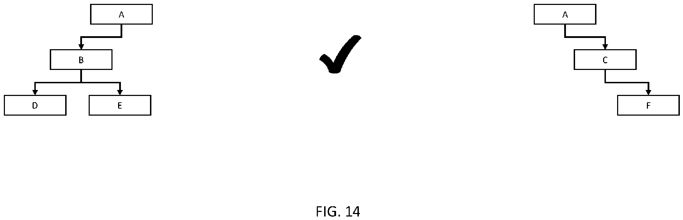

Considering compatibility, **FIG. 13** shows two type graphs which are compatible with one another since they both have the same defined types. **FIG. 14** shows two type graphs which are compatible with one another since those defined types which are in both of those type graphs are the same. It is true that only type A is common between those graphs, but the other types shown do not conflict between the two graphs.

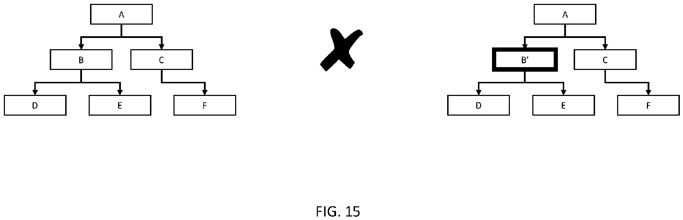

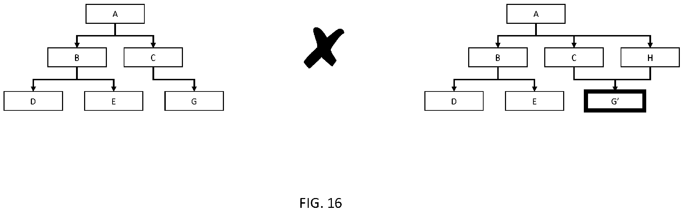

On the other hand, **FIG. 15** shows two type graphs which are not compatible with one another since the types B and B' are not substantially identical (not the same as one another), and thus the rules for types D and E may be different between the two type graphs. **FIG. 16** also shows two type graphs which are not compatible with one another since the types G and G' are not substantially identical (not the same as one another). It is assumed here that types G and G' are effectively identified as being of the same type (hence both are denoted by the same letter) but are different from one another in some way since G' inherits form C and H, whereas G inherits only from C. If G' were a completely different type from type G, such as type F, then the two type graphs would be compatible.

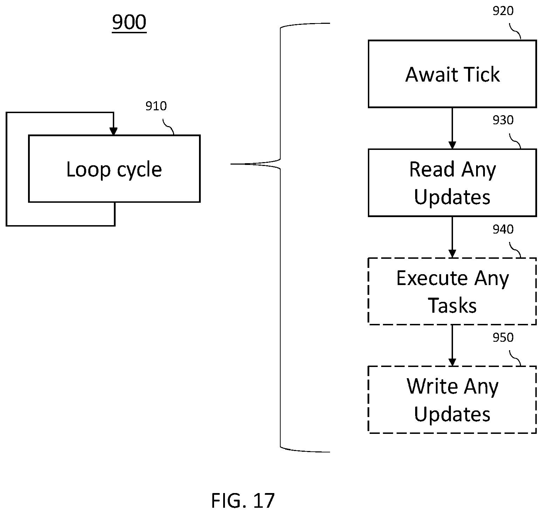

Returning back to FIG. 2, **FIG. 17** is a schematic diagram of a high-level method 900 useful for understanding that the modelling apparatus 100 may operate in a series of loop cycles 910.

Operations in each loop cycle a triggered by a tick signal (synchronisation signal) which may be synchronised to an internal clock signal of the modelling apparatus 100. Thus, in each loop cycle 910 the tick signal is awaited 920, following which any updates are read 930.

The reading of any updates 930 may involve reading data from a remote modelling apparatus such as modelling apparatus 100-2 and/or reading data from the robotic system 10A being modelled. In this way, current state data values may be populated into the descriptive instances 210 of the model 200.

In the case where the modelling apparatus 100 performs control of the robotic system 10A, and the model 200 has functional (active) instances 210, tasks associated with the relevant instances 210 may be carried out in an order determined by the relationships between the instances of the model.

Any updates may then be written 950. This may involve writing data to a remote modelling apparatus such as modelling apparatus 100-2 and/or writing data to the robotic system 10A being modelled, so as to control the robotic system 10A.

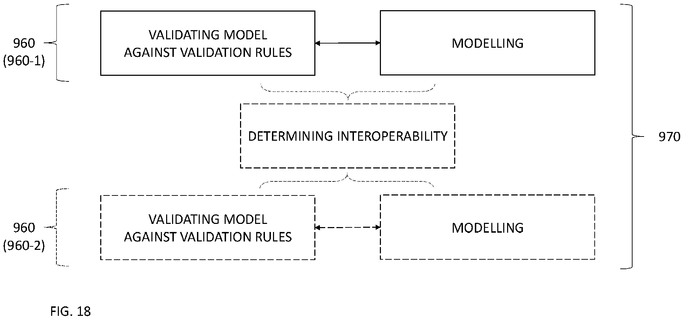

**FIG. 18** is a schematic diagram of high-level methods 960 and 970 embodying the present invention, and also useful for understanding embodiments disclosed herein.

Method 960 may be employed by the modelling apparatus 100, or either of the modelling apparatuses 100-1 and 100-2. Taking the modelling apparatus 100 as an example, the method 960 is a method of modelling the robotic system 10A, and comprises modelling with the model 200, the model 200 comprising instances 210 of at least a subset of a set of defined types 310 interconnected with links 220 as described earlier, and validating the model 200 against the validation rules 160 by determining whether the model 200 satisfies those rules.

Method 970 may be employed by the multi-apparatus system 700 comprising the first and second modelling apparatuses 100-1 and 100-2 modelling apparatus 100, or either of the modelling apparatuses 100-1 and 100-2. As indicated, method 970 comprises an instance of method 960, per modelling apparatus. For example, the upper method 960-1 in FIG. 18 may correspond to the first modelling apparatus 100-1 and the lower method 960-2 may correspond to the second modelling apparatus 100-2.

Additionally, the method 970 comprises determining interoperability between the model of the first robotic system and the model of the second robotic system as described in connection with FIG. 11. This may comprise validating the model 200-1 of the first robotic system against the validation rules of the first modelling apparatus 100-1 or method 960-1, and/or validating the model 200-2 of the second robotic system against the validation rules of the second modelling apparatus 100-2 or method 960-2, and/or determining compatibility between at least a first-model-specific part of the one or more directed acyclic graphs of the first modelling apparatus 100-1 or method 960-1 and a second-model-specific part of the one or more directed acyclic graphs of the second modelling apparatus 100-2 or method 960-2.

In summary, the techniques described herein provide a solution, not only to the requirement to securely integrate complex robotic systems, but to long-term maintainability and extensibility, the ability to extend a system with minimum effort. This is advantageous e.g. in nuclear industry scenarios. By abstracting the hardware, control system implementation, and operator interface, incompatibility issues that arise from hardware changes are reduced, reusability and reconfigurability of control solutions are increased, and consistent operator interfaces irrespective of hardware configuration can be provided.

The control systems framework thus aims at long-term maintainability and extensibility. To achieve this the system infrastructure implements two concepts: 1) low coupling between components; and 2) high cohesion of highly granular modular components. A building blocks methodology (instance data units and type data units) is provided. Required system functionality is provided by bringing together multiple common plug-and-play components (instance data units and type data units). In some arrangements, the instance data units and type data units use the same structure for internal data representation and have the same external interface. This data representation can be used as part of a communications protocol to allow distributed components (multiple clusters, agents, modelling apparatuses) of a single control system to exchange data without prior knowledge of each other. This means a control system can grow to incorporate new hardware and control features, while minimising the impact on the local system and without modifying other distributed components.

The self-describing distributed data model consists of a collection of instance data units. Each instance data unit contains information, regarding how it is connected to other instance data units, available functionality, and an associated type. These types form a software ontology that contain rules (type rules) regarding the syntactic information stored in each instance data unit and morphological rules to create standardised structures. The inherited nature of the ontology provides semantic meaning to the various control systems components. Within the framework, ontology is used to build a common structure of domain-specific information, which is then used to distribute and reuse components to make explicit assumptions. In addition, the morphology is used to provide syntactic meaning and a create structures between components using types represented in the ontology. These structures are used to standardise distributed components and allow explicit assumptions to be made regarding the contents of a given system and facilitate interoperability.

The connections between instance data units are described using "relationships". A defined type can define not only the relationships it must have (to be considered of that particular type), but also how many (minimum, maximum, or absolute) instance data units must be related to it and their associated types. These relationship rules produce a system with a particular morphology, which is consistent between systems using the same types. These morphologies tend to fall into one of two distinct groups: structural (e.g. a robot arm composes of a serial manipulator and a gripper) and behavioural (e.g. an inverse kinematics solver requires an input of a Cartesian position and outputs a number of joint angles). These relationship rules lead to enhanced interoperability - they are used to make explicit assumption on the integrated components.

A self-describing data representation is used advantageously herein. Standardised but extensible data interfaces (defined by the instance data units and type data units) are developed to provide interoperability, whilst semantic meaning is self-described by the components through defined types associated with a software ontology for robotic and control system components. To aid with structural interpretation in data exchange between these interfaces, software morphologies are implemented and used to provide syntactic meaning. The robotic and control system knowledge structure is distributed across agents at run-time.

Encapsulation combined with low coupling between components and high cohesion of fine-grained modular components, along with the use of standardised interfaces helps in achieving modularity and testability. Quality and maintainability requirements may then be achieved by life-cycle management processes and effective component-based development techniques. It is possible to run a system or apparatus as described herein with a constant memory footprint to ensure minimum runtime allocation and memory leakage.

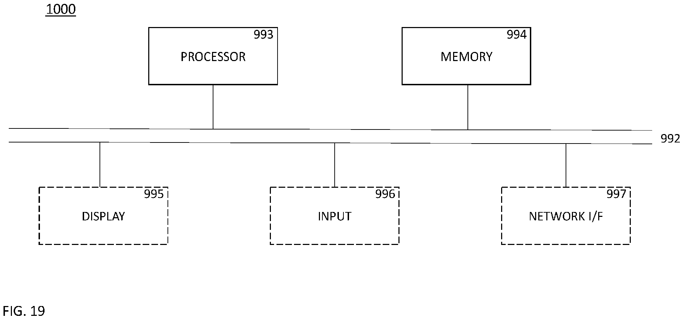

FIG. 19 is a block diagram of a computing device 1000, which embodies the present invention, and which may be used to implement any of the apparatuses or methods described herein. The computing device 1000 comprises a processor 993, and memory 994. Optionally, the computing device also includes a network interface 997 for communication with other computing devices, for example between the first and second modelling apparatuses 100-1 and 100-2.

For example, an embodiment may be composed of a network of such computing devices. Optionally, the computing device also includes one or more input mechanisms such as keyboard and mouse 996, and a display unit such as one or more monitors 995.

The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of modules and units described herein. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device, for example to generate or create the model 200, or to use the model 200 to discover a state of the robotic system 10A and/or control the robotic system 10A using the model 200. The input mechanisms 996 may comprise a user interface configured, based on a user input, to cause the modelling apparatus 100 to add, remove, change or control the model 200 and/or the validation rules 160.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Of course, the present embodiments have been described in the context of modelling (and even controlling) a robotic system. However, it will be appreciated that the modelling described herein may be applied to other types of system such as any system where the ability to describe (or control) its current state, structure/configuration, and available instructions is beneficial/required. In this regard, references to a robotic system may be taken to be references to a system or a controllable system. Similarly, references to a robot may be taken to be references to a component of the system or a controllable component of the controllable system. The present disclosure will be understood accordingly.

The present disclosure extends to computer programs which, when executed on a computer, causes the computer to implement any of the apparatuses or methods described herein. Such computer programs may be stored on computer-readable media.

The skilled person will recognise that some aspects of the above described apparatus and methods may be embodied as processor control code, for example on a non-volatile carrier medium such as a disk, CD- or DVD-ROM, programmed memory such as read only memory (Firmware), or on a data carrier such as an optical or electrical signal carrier. For example, the modelling apparatus 100 may be implemented as a processor operating based on processor control code.

For some applications, such aspects will be implemented on a DSP (Digital Signal Processor), ASIC (Application Specific Integrated Circuit) or FPGA (Field Programmable Gate Array). Thus the code may comprise conventional program code or microcode or, for example, code for setting up or controlling an ASIC or FPGA. The code may also comprise code for dynamically configuring re-configurable apparatus such as re-programmable logic gate arrays. Similarly, the code may comprise code for a hardware description language such as Verilog TM or VHDL. As the skilled person will appreciate, the code may be distributed between a plurality of coupled components in communication with one another. Where appropriate, such aspects may also be implemented using code running on a field-(re)programmable analogue array or similar device in order to configure analogue hardware.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in the claim, "a" or "an" does not exclude a plurality, and a single feature or other unit may fulfil the functions of several units recited in the claims. Any reference numerals or labels in the claims shall not be construed so as to limit their scope.

This disclosure encompasses all changes, substitutions, variations, alterations, and modifications to the example embodiments herein that a person having ordinary skill in the art would comprehend. Similarly, where appropriate, the appended claims encompass all changes, substitutions, variations, alterations, and modifications to the example embodiments herein that a person having ordinary skill in the art would comprehend. Moreover, reference in the appended claims to an apparatus or system or a component of an apparatus or system being adapted to, arranged to, capable of, configured to, enabled to, operable to, or operative to perform a particular function encompasses that apparatus, system, or component, whether or not it or that particular function is activated, turned on, or unlocked, as long as that apparatus, system, or component is so adapted, arranged, capable, configured, enabled, operable, or operative. Accordingly, modifications, additions, or omissions may be made to the systems, apparatuses, and methods described herein without departing from the scope of the disclosure. For example, the components of the systems and apparatuses may be integrated or separated. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

Although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described above.

Unless otherwise specifically noted, articles depicted in the drawings are not necessarily drawn to scale.

All examples and conditional language recited herein are intended for pedagogical objects to aid the reader in understanding the disclosure and the concepts contributed by the inventor to furthering the art, and are construed as being without limitation to such specifically recited examples and conditions. Although embodiments of the present disclosure have been described in detail, it should be understood that various changes, substitutions, and alterations could be made hereto without departing from the spirit and scope of the disclosure.

Although specific advantages have been enumerated above, various embodiments may include some, none, or all of the enumerated advantages. Additionally, other technical advantages may become readily apparent to one of ordinary skill in the art after review of the foregoing figures and description.

The present disclosure extends to, and/or the present invention is defined at least in part by, the following numbered paragraphs:

1. Modelling apparatus for modelling a robotic system, the modelling apparatus configured to:

model the robotic system with a model, the model comprising instances of at least a subset of a set of defined types interconnected with links, each instance being a description of an element of the robotic system, the links between the instances representing relationships therebetween; and
validate the model against validation rules by determining whether the model satisfies those rules,
wherein the validation rules comprise:
a definition of one or more directed acyclic graphs of the defined types interconnected with parent-child relationships, the defined types corresponding to nodes and the parent-child relationships corresponding to directional edges of the one or more directed acyclic graphs, each defined type defining type rules for that type which an instance of that type must satisfy in order to be valid, each parent-child relationship between a pair of the types defining those types as parent and child types relative to one another according to the corresponding edge direction, wherein each child type inherits the type rules of each of its parent types according to the parent-child relationships.

2. The modelling apparatus according to paragraph 1, wherein each child type defines:

the type rules which that child type inherits from each of its parent types by reference to each of its parent types; and/or

each type rule for that child type beyond the type rules which that child type inherits from each of its parent types.

3. The modelling apparatus according to paragraph 1 or 2, wherein:

at least one child type has at least two parent types; and/or

at least one child type has at least one parent type which itself is a child type having at least one parent type, optionally which itself is a child type having at least one parent type.

4. The modelling apparatus according to any of the preceding paragraphs, wherein the validation rules comprise morphological rules which define, for at least one particular defined type, interconnections which an instance of that particular defined type must have with other instances of defined types in the model in order for the model to be valid, optionally wherein, for at least one defined type, its type rules comprise its morphological rules.

5. The modelling apparatus according to any of the preceding paragraphs, wherein the model defines a directed graph of its instances, the links being directional links, the instances corresponding to nodes and the links corresponding to edges of the directed graph, each link being owned by one of the instances which it interconnects, the direction of the links representing an input relationship or an output relationship between the interconnected instances concerned relative to the instance owning the link concerned.

6. The modelling apparatus according to paragraph 5, wherein:

the direction of the links represents an input relationship between the interconnected instances concerned relative to the instance owning the link concerned when the direction points towards the instance owning the link concerned; and/or

the direction of the links represents an output relationship between the interconnected instances concerned relative to the instance owning the link concerned when the direction points away from the instance owning the link concerned.

7. The modelling apparatus according to paragraph 5 or 6, wherein:

for at least one link whose direction points towards its owner instance, its other instance is an input for that owner instance; and/or

for at least one link whose direction points away from its owner instance, its other instance is an output for that owner instance.

8. The modelling apparatus according to any of paragraphs 5 to 7, wherein:

for at least one link whose direction points towards its owner instance, input information for that owner instance is represented in the other instance of that link or is read over that link from the other instance of that link; and/or

for at least one link whose direction points away from its owner instance, output information of that owner instance is represented in the other instance of that link or is written over that link to the other instance of that link.

9. The modelling apparatus according to any of paragraphs 5 to 8, wherein:
for at least one link whose direction points towards its owner instance, possessed and/or contained information for that owner instance is represented in the other instance of that link.

10. The modelling apparatus according to any of the preceding paragraphs, wherein:

the defined types comprise descriptive types and optionally also at least one functional type;

each instance of a descriptive type describes a current state and/or a target state of its element the robotic system; and optionally

each instance of a functional type describes how to manipulate data of an interconnected instance of a descriptive type to derive information which describes the robotic system and/or to model activity in the robotic system.

11. The modelling apparatus according to any of the preceding paragraphs, wherein each instance is an instance data unit which optionally defines each of its links to another instance or instances of the model.

12. The modelling apparatus according to paragraph 11, wherein each instance data unit comprises:

an indication the defined type of which it is an instance; and
typed data,
optionally wherein each instance data unit further comprises a definition of the status of one or more supported commands.

13. The modelling apparatus according to paragraph 11 or 12, wherein the instance data units have the same structured format as one another.

14. The modelling apparatus according to any of paragraphs 11 to 13, wherein at least one instance data unit is associated with an extension data unit defining a task to be executed to manipulate data of the instance concerned or of an interconnected instance.

15. The modelling apparatus according to any of the preceding paragraphs, wherein the definition of the one or more directed acyclic graphs of the defined types comprises a type data unit per defined type, each said type data unit defining the defined type concerned and optionally, for each defined type other than a root defined type corresponding to a root node of the one or more directed acyclic graphs, the parent-child relationship to each of its parent types.

16. The modelling apparatus according to paragraph 15, wherein each type data unit comprises:

an indication its defined type; and
a definition of at least one data type of which data type data of an instance of the defined type must be in order to be valid,
optionally wherein each type data unit further comprises a definition of how the status of one or more supported commands must be expressed in an instance of the defined type in order to be valid.

17. The modelling apparatus according to paragraph 15 or 16, wherein the type data units have the same structured format as one another.

18. The modelling apparatus according to paragraph 17, wherein the structured format of the instance data units corresponds to the structured format of the type data units.

19. The modelling apparatus according to any of the preceding paragraphs, wherein:

each instance of the model is a description of an element of a robot of the robotic system and/or of a robot controller of the robotic system; and/or
the model represents a current state and/or a target state of at least part of: the robotic system; the robot of the robotic system; or the robot controller of the robotic system.

20. The modelling apparatus according to any of the preceding paragraphs, comprising an interface for connection between the modelling apparatus and the robotic system, wherein the modelling apparatus is configured, following validation of the model, to:

receive data from the robotic system via the interface and to update the model based on the received data; and/or
output data via the interface to the robotic system to control the robotic system based on the model.

21. The modelling apparatus according to any of the preceding paragraphs, wherein said one or more directed acyclic graphs are apparatus-level directed acyclic graphs, and wherein the modelling apparatus is configured to:

generate one or more model-specific directed acyclic graphs of the defined types represented in the model, the one or more model-specific directed acyclic graphs being a part of the one or more apparatus-level directed acyclic graphs which comprises each root defined type corresponding to each root node, all of the defined types having instances in the model and each other defined type connected therebetween via the parent-child relationships; and

validate the model against the validation rules defined in the one or more model-specific directed acyclic graphs, and optionally determine that the model is valid against each validation rule defined in the one or more apparatus-level directed acyclic graphs but not in the one or more model-specific directed acyclic graphs by deeming that those rules are satisfied.

22. The modelling apparatus according to any of the preceding paragraphs, being or comprising computing or computer-implemented or computer-aided apparatus.

23. The modelling apparatus according to any of the preceding paragraphs, configured to:

change the model and/or the validation rules; and optionally
following said change, validate the model against the validation rules by determining whether the model satisfies those rules.

24. The modelling apparatus according to paragraph 23, wherein said change comprises at least one of (or any combination of):

changing the type rules of one of the defined types, optionally of one of the defined types of which the model comprises an instance, or of one of the defined types from which a particular defined type inherits type rules, the model comprising an instance of that particular defined type, or of one of the defined types which inherits type rules from a given defined type, the model comprising an instance of that given defined type;
adding a new defined type to the one or more directed acyclic graphs along with at least one parent-child relationship to an existing defined type of the one or more directed acyclic graphs, optionally wherein the new defined type is interconnected with a parent-child relationship to a particular existing defined type such that it inherits the type rules of that particular existing defined type, the model comprising an instance of that particular existing defined type;
removing an unwanted defined type from the one or more directed acyclic graphs along with each of its parent-child relationships to an existing defined type of the one or more directed acyclic graphs, optionally along with removing any defined type which inherits its rules from the unwanted defined type, optionally wherein the unwanted defined type is interconnected with at least one parent-child relationship to a particular existing defined type such that it inherits the type rules of that particular existing defined type, the model comprising an instance of that particular existing defined type;
changing an instance of a defined type in the model;
adding an instance of a defined type to the model along with at least one link to an existing instance of the model; and
removing an instance of a defined type from the model along with at least one link to an existing instance of the model.

25. The modelling apparatus according to any of the preceding paragraphs, configured:

if it is determined that the model does satisfy the validation rules, to determine that the model is valid; and/or
if it is determined that the model does not satisfy the validation rules, to determine that the model is not valid.

26. The modelling apparatus according to any of the preceding paragraphs, comprising a user interface configured, based on a user input, to cause the modelling apparatus to add, remove, change, use or control the model and/or the validation rules.

27. A multi-apparatus modelling system comprising first and second modelling apparatuses configured to communicate with one another, each of the first and second modelling apparatuses being a modelling apparatus according to any of the preceding paragraphs, wherein:

the first modelling apparatus models a first robotic system with a first model of the first robotic system and the second modelling apparatus models a second robotic system with a second model of the second robotic system; and
the multi-apparatus modelling system is configured to determine interoperability between the first model and the second model by:

validating the first model against the validation rules of the second modelling apparatus; and/or
validating the second model against the validation rules of the first modelling apparatus; and/or
determining compatibility between at least a first-model-specific part of the one or more directed acyclic graphs of the first modelling apparatus and a second-model-specific part of the one or more directed acyclic graphs of the second modelling apparatus.

28. The multi-apparatus modelling system according to paragraph 27, wherein:

the first-model-specific part of the one or more directed acyclic graphs of the first modelling apparatus is a part of the one or more directed acyclic graphs of the first modelling apparatus which comprises each root defined type corresponding to each root node, all of the defined types having instances in the first model and each other defined type connected therebetween via the parent-child relationships; and
the second-model-specific part of the one or more directed acyclic graphs of the second modelling apparatus is a part of the one or more directed acyclic graphs of the second modelling apparatus which comprises each root defined type corresponding to each root node, all of the defined types having instances in the second model and each other defined type connected therebetween via the parent-child relationships.

29. The multi-apparatus modelling system according to paragraph 27 or 28, configured to determine that at least the first-model-specific part of the one or more directed acyclic graphs of the first modelling apparatus and at least the second-model-specific part of the one or more directed acyclic graphs of the second modelling apparatus are compatible if:

those defined types which are in both of those parts are substantially identical; and/or
those defined types which are in both of those parts define at least the same type rules as one another; and/or
they do not define conflicting rules or a conflicting hierarchy of defined types.

30. The multi-apparatus modelling system according to any of paragraphs 27 to 29, wherein:

the first modelling apparatus is configured to generate the first-model-specific part of the one or more directed acyclic graphs of the first modelling apparatus;
the second modelling apparatus is configured to generate the second-model-specific part of the one or more directed acyclic graphs of the second modelling apparatus; and
either the first modelling apparatus or the second modelling apparatus is configured to determine compatibility between the first-model-specific part of the one or more directed acyclic graphs of the first modelling apparatus and the second-model-specific part of the one or more directed acyclic graphs of the second modelling apparatus.

31. The multi-apparatus modelling system according to any of paragraphs 27 to 30, wherein the second modelling apparatus is configured to obtain the first-model-specific part of the one or more directed acyclic graphs of the first modelling apparatus from the first modelling apparatus determine and determine compatibility between the first-model-specific part of the one or more directed acyclic graphs of the first modelling apparatus and the second-model-specific part of the one or more directed acyclic graphs of the second modelling apparatus.

32. The multi-apparatus modelling system according to paragraph 31, wherein:

the first modelling apparatus is a publisher apparatus configured to make the first-model-specific part of the one or more directed acyclic graphs of the first modelling apparatus available to a subscriber apparatus; and
the second modelling apparatus is the subscriber apparatus.

33. A method of modelling a robotic system, the method comprising:

modelling the robotic system with a model, the model comprising instances of at least a subset of a set of defined types interconnected with links, each instance being a description of an element of the robotic system, the links between the instances representing relationships therebetween; and
validating the model against validation rules by determining whether the model satisfies those rules,
wherein the validation rules comprise:
a definition of one or more directed acyclic graphs of the defined types interconnected with parent-child relationships, the defined types corresponding to nodes and the parent-child relationships corresponding to directional edges of the one or more directed acyclic graphs, each defined type defining type rules for that type which an instance of that type must satisfy in order to be valid, each parent-child relationship between a pair of the types defining those types as parent and child types relative to one another according to the corresponding edge direction, wherein each child type inherits the type rules of each of its parent types according to the parent-child relationships.

34. A computer program which, when executed on a computer, causes the computer to carry out the method of paragraph 33.

35. A computer-readable medium having the computer program of paragraph 34 stored thereon.

36. A suite of methods comprising first and second methods, each of the first and second methods being a method according to paragraph 33, wherein:
the first method models a first robotic system with a first model of the first robotic system and the second method models a second robotic system with a second model of the second robotic system; and
the suite of methods further comprises determining interoperability between the first model and the second model by:

validating the first model against the validation rules of the second method; and/or
validating the second model against the validation rules of the first method; and/or
determining compatibility between at least a first-model-specific part of the one or more directed acyclic graphs of the first method and a second-model-specific part of the one or more directed acyclic graphs of the second method.

37. A suite of computer programs which, when executed on one or more computers, causes the one or more computers to carry out the suite of methods of paragraph 36.

38. A computer-readable medium having the suite of computer programs of paragraph 37 stored thereon.

39. A robotic system comprising modelling apparatus according to any of paragraphs 1 to 26, or the multi-apparatus modelling system according to any of paragraphs 27 to 32.

40. The robotic system according to paragraph 39, comprising at least one robot modelled by each model.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1.  Modelling apparatus for modelling a robotic system, the modelling apparatus configured to:

model the robotic system with a model, the model comprising instances of at least a subset of a set of defined types interconnected with links, each instance being a description of an element of the robotic system, the links between the instances representing relationships therebetween; and
validate the model against validation rules by determining whether the model satisfies those rules,
wherein the validation rules comprise:
a definition of one or more directed acyclic graphs of the defined types interconnected with parent-child relationships, the defined types corresponding to nodes and the parent-child relationships corresponding to directional edges of the one or more directed acyclic graphs, each defined type defining type rules for that type which an instance of that type must satisfy in order to be valid, each parent-child relationship between a pair of the types defining those types as parent and child types relative to one another according to the corresponding edge direction, wherein each child type inherits the type rules of each of its parent types according to the parent-child relationships.

2.  The modelling apparatus according to claim 1, wherein each child type defines:

the type rules which that child type inherits from each of its parent types by reference to each of its parent types; and/or

each type rule for that child type beyond the type rules which that child type inherits from each of its parent types.

3. The modelling apparatus according to claim 1 or 2, wherein:

at least one child type has at least two parent types; and/or
at least one child type has at least one parent type which itself is a child type having at least one parent type, optionally which itself is a child type having at least one parent type.

4. The modelling apparatus according to any of the preceding claims, wherein the validation rules comprise morphological rules which define, for at least one particular defined type, interconnections which an instance of that particular defined type must have with other instances of defined types in the model in order for the model to be valid, optionally wherein, for at least one defined type, its type rules comprise its morphological rules.

5. The modelling apparatus according to any of the preceding claims, wherein the model defines a directed graph of its instances, the links being directional links, the instances corresponding to nodes and the links corresponding to edges of the directed graph, each link being owned by one of the instances which it interconnects, the direction of the links representing an input relationship or an output relationship between the interconnected instances concerned relative to the instance owning the link concerned.

6. The modelling apparatus according to any of the preceding claims, wherein:

the defined types comprise descriptive types and optionally also at least one functional type;
each instance of a descriptive type describes a current state and/or a target state of its element the robotic system; and optionally
each instance of a functional type describes how to manipulate data of an interconnected instance of a descriptive type to derive information which describes the robotic system and/or to model activity in the robotic system.

7. The modelling apparatus according to any of the preceding claims, wherein each instance is an instance data unit which optionally defines each of its links to another instance or instances of the model,
optionally wherein the instance data units have the same structured format as one another.

8. The modelling apparatus according to any of the preceding claims, wherein the definition of the one or more directed acyclic graphs of the defined types comprises a type data unit per defined type, each said type data unit defining the defined type concerned and optionally, for each defined type other than a root defined type corresponding to a root node of the one or more directed acyclic graphs, the parent-child relationship to each of its parent types.

9. The modelling apparatus according to claim 8, wherein the type data units have the same structured format as one another,
optionally wherein the structured format of the instance data units corresponds to the structured format of the type data units.

10. The modelling apparatus according to any of the preceding claims, configured to:

change the model and/or the validation rules; and
following said change, validate the model against the validation rules by determining whether the model satisfies those rules.

11. The modelling apparatus according to claim 10, wherein said change comprises at least one of:

changing the type rules of one of the defined types, optionally of one of the defined types of which the model comprises an instance, or of one of the defined types from which a particular defined type inherits type rules, the model comprising an instance of that particular defined type, or of one of the defined types which inherits type rules from a given defined type, the model comprising an instance of that given defined type;
adding a new defined type to the one or more directed acyclic graphs along with at least one parent-child relationship to an existing defined type of the one or more directed acyclic graphs, optionally wherein the new defined type is interconnected with a parent-child relationship to a particular existing defined type such that it inherits the type rules of that particular existing defined type, the model comprising an instance of that particular existing defined type;

removing an unwanted defined type from the one or more directed acyclic graphs along with each of its parent-child relationships to an existing defined type of the one or more directed acyclic graphs, optionally along with removing any defined type which inherits its rules from the unwanted defined type, optionally wherein the unwanted defined type is interconnected with at least one parent-child relationship to a particular existing defined type such that it inherits the type rules of that particular existing defined type, the model comprising an instance of that particular existing defined type;

changing an instance of a defined type in the model;

adding an instance of a defined type to the model along with at least one link to an existing instance of the model; and

removing an instance of a defined type from the model along with at least one link to an existing instance of the model.

12. The modelling apparatus according to any of the preceding claims, wherein:

each instance of the model is a description of an element of a robot of the robotic system and/or of a robot controller of the robotic system; and/or

the model represents a current state and/or a target state of at least part of: the robotic system; the robot of the robotic system; or the robot controller of the robotic system.

13. The modelling apparatus according to any of the preceding claims, comprising an interface for connection between the modelling apparatus and the robotic system, wherein the modelling apparatus is configured, following validation of the model, to:

receive data from the robotic system via the interface and to update the model based on the received data; and/or

output data via the interface to the robotic system to control the robotic system based on the model.

14. A multi-apparatus modelling system comprising first and second modelling apparatuses configured to communicate with one another, each of the first and second modelling apparatuses being a modelling apparatus as claimed in any of the preceding claims, wherein:

the first modelling apparatus models a first robotic system with a first model of the first robotic system and the second modelling apparatus models a second robotic system with a second model of the second robotic system; and

the multi-apparatus modelling system is configured to determine interoperability between the first model and the second model by:

validating the first model against the validation rules of the second modelling apparatus; and/or

validating the second model against the validation rules of the first modelling apparatus; and/or

determining compatibility between at least a first-model-specific part of the one or more directed acyclic graphs of the first modelling apparatus and a second-model-specific part of the one or more directed acyclic graphs of the second modelling apparatus.

15. The multi-apparatus modelling system according to claim 14, configured to determine that at least the first-model-specific part of the one or more directed acyclic graphs of the first modelling apparatus and at least the second-model-specific part of the one or more directed acyclic graphs of the second modelling apparatus are compatible if:

those defined types which are in both of those parts are substantially identical; and/or

those defined types which are in both of those parts define at least the same type rules as one another; and/or

they do not define conflicting rules or a conflicting hierarchy of defined types.

FIG. 1A

FIG. 1B

MODELLING APPARATUS 100

MODELLER 120

MODEL VALIDATOR 140

VALIDATION RULES 160

FIG. 2

200

210

**Robotic Arm**
Arm

220

210

**KUKA LBR iiwa**
Serial Manipulator

220

**Joint**
Rotary Axis

**Joint**
Rotary Axis

210

**KUKA FK**
Forward Kinematics

**KUKA IK**
Inverse Kinematics

**Tip Position**
Cartesian Concept

**Manipulator Controller**
Cartesian Controller

**Tip Position**
Cartesian Concept

220

210

**Robotiq 2-Finger Gripper**
Gripper

210

**Joint**
Rotary Axis

**Joint**
Rotary Axis

210

**Gripper Controller**
Rotary Axis Controller

FIG. 3

210

Arm

220

210

Serial
Manipulator

220

210

Gripper

FIG. 4

210

```
                            ┌──────────────────────┐
                            │         Arm          │
                            └──────────────────────┘
                    220          ▲            ▲
         210                     │            │
    ┌──────────────────────┐        ┌──────────────────────┐
    │  Serial Manipulator  │        │       Gripper        │
    └──────────────────────┘        └──────────────────────┘
       ▲            ▲                   ▲            ▲
       │            │                   │            │
┌──────────────┐ ┌──────────────┐ ┌──────────────┐ ┌──────────────┐
│ Rotary Axis  │ │ Rotary Axis  │ │ Rotary Axis  │ │ Rotary Axis  │
│   (Input)    │ │   (Output)   │ │   (Input)    │ │   (Output)   │
└──────────────┘ └──────────────┘ └──────────────┘ └──────────────┘
          ┌────────────────┐            ┌────────────────┐
          │ ▶ [function] ▶ │            │ ▶ [function] ▶ │
          └────────────────┘            └────────────────┘
```

FIG. 5

29

"Input"    "Process"    "Output"

210 Concept — 220 → **Processor** — 220 → 210 Concept

210 Axis Concept — 220 → **Forward Kinematics** — 220 → 210 Cartesian Concept

FIG. 6

300

310

Root Type

320

310

Rad-hard Equipment

Manipulator

Serial Manipulator

Parallel Manipulator

Rad-hard Serial Manipulator

FIG. 7

FIG. 8

Instance Data Unit (Simplex)                                          500

| Path | ID | Type |
|------|----|----|

Data

Relationships

Commands (Definition)

Command Mailbox

FIG. 9

Type Data Unit                                                    600

ID          Parent Type(s)

Data Rules

Relationship Rules

Command Rules

FIG. 10

FIG. 11

400-1(MS)

FIG. 12

FIG. 13

FIG. 14

FIG. 15

FIG. 16

900

910

Loop cycle

920

Await Tick

930

Read Any
Updates

940

Execute Any
Tasks

950

Write Any
Updates

FIG. 17

FIG. 18

1000

| | |
|---|---|
| **993** PROCESSOR | **994** MEMORY |

992

| | | |
|---|---|---|
| **995** DISPLAY | **996** INPUT | **997** NETWORK I/F |

FIG. 19

Europäisches
Patentamt

European
Patent Office

Office européen
des brevets

# EUROPEAN SEARCH REPORT

Application Number

EP 21 15 7352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JÄRVENPÄÄ EEVA ET AL: "Implementation of capability matchmaking software facilitating faster production system design and reconfiguration planning", JOURNAL OF MANUFACTURING SYSTEMS, SOCIETY OF MANUFACTURING ENGINEERS, DEARBORN, MI, US, vol. 53, 1 October 2019 (2019-10-01), pages 261-270, XP085921199, ISSN: 0278-6125, DOI: 10.1016/J.JMSY.2019.10.003 [retrieved on 2019-11-13] * page 261 - page 263 * ----- | 1-15 | INV. G06N5/04 G06N5/02 |
| A | US 2006/004489 A1 (WEISS MARTIN [DE]) 5 January 2006 (2006-01-05) * paragraph [0002] - paragraph [0078] * ----- | 13 | |
| A | MEHRDAD SABETZADEH ET AL: "Consistency Checking of Conceptual Models via Model Merging", REQUIREMENTS ENGINEERING CONFERENCE, 2007. RE '07. 15TH IEEE INTERNATIONAL, IEEE, PISCATAWAY, NJ, USA, 1 October 2007 (2007-10-01), pages 221-230, XP031161611, ISBN: 978-0-7695-2935-6 * pages 221, 225 * ----- | 1-15 | TECHNICAL FIELDS SEARCHED (IPC) G06N G05B B25J |

The present search report has been drawn up for all claims

| Place of search | Date of completion of the search | Examiner |
|---|---|---|
| The Hague | 5 July 2021 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 7352

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2021

| Patent document cited in search report | Publication date | Patent family member(s) | Publication date |
|---|---|---|---|
| US 2006004489 A1 | 05-01-2006 | DE 102004031485 A1<br>EP 1612004 A2<br>US 2006004489 A1 | 19-01-2006<br>04-01-2006<br>05-01-2006 |

For more details about this annex : see Official Journal of the European Patent Office, No. 12/82

EPO FORM P0459